# EUROPEAN PATENT APPLICATION

(11) **EP 4 560 066 A1**
(43) Date of publication of application: **28.05.2025**
(21) Application number: 23849444.7
(22) Date of filing: 02.08.2023
(51) Int. Cl.: D06F 39/10

(54) **FILTERING MODULE, FILTERING MODULE CONTROL METHOD, AND WASHING EQUIPMENT**

(30) Priority: 02.08.2022 CN 202210921404; 02.08.2022 CN 202210921671; 02.08.2022 CN 202210920792
(71) Applicant: Qingdao Haier Washing Machine Co., Ltd., Qingdao, Shandong 266101 (CN); Haier Smart Home Co., Ltd., Qingdao, Shandong 266101 (CN)
(72) Inventor: XU, Sheng, Qingdao, Shandong 266101 (CN); LV, Yanfen, Qingdao, Shandong 266101 (CN)
(74) Representative: Beck & Rössig European Patent Attorneys
(86) International application number: PCT/CN2023/110658
(87) International publication number: WO 2024/027738

(57) **Abstract**

The present application relates to the technical field of washing equipment, and discloses a filtering module, a filtering module control method, and washing equipment. The filtering module includes: a filtering device on which a sewage outlet used for discharging sewage carrying filtered impurities and a recovery device connected with the sewage outlet of the filtering device, wherein the recovery device is provided with at least two lint collection assemblies, and the lint collection assemblies mutually independently and/or jointly receive the sewage dischargedfrom the filtering device and collect the filtered impurities in the sewage. In the present application, at least two lint collection assemblies are arranged in the recovery device, and the at least two lint collection assemblies are used for collecting the filtered impurities, so that the total quantity of collectible filtered impurities can be increased, thereby prolonging the use period of the recovery device after each cleaning; and the lint collection assemblies can be cleaned separately, so that the use is more convenient.

## Description

### Technical Field

The present application belongs to the field of washing equipment, and in particular, relates to a filter module, a control method of the filter module and washing equipment.

### Background

In the process of washing laundry in a washing equipment, for example, a washing machine, friction between laundry and between the laundry and the washing machine itself may cause lint to fall off the laundry and mix into the washing water. If the lint in the washing water is not removed, it is likely that the lint adheres to the surface of the laundry after washing, affecting the cleaning effect of the laundry. Therefore, the existing washing machine are provided with a filter for filtering lint, and during the washing program, washing water is continuously passed through the filter to remove lint from the washing water.

However, filtered impurities such as lint can accumulate in the filter after filtration, to cause the filter to become clogged in the long run and make it impossible to perform the filtering function. The filter is usually installed inside the washing machine, sousers cannot directly observe the accumulation of filtered impurities and can only clean it regularly. However, if a large amount of lint is fallen off the laundry in a period of time, or if users forget to clean the filter for a long time, the filter may become clogged. At this time, if the washing machine is used to wash laundry, the filter cannot perform the filtering function, which can affect the cleaning effect of the laundry. If the washing machine cannot determine whether the filter is clogged and forcibly drives the washing water into the filter, the filter cannot drain water to cause the water pressure in the waterway structure of the washing machine to increase, and in severe cases, even to damage the waterway structure.

In recent years, the concept of microplastics has been proposed in the field of environmental protection and has gradually paid increasing attention. As report, an important source of microplastics is wastewater discharged from household washing machines. Because with the popularization of chemical fiber laundry, fibers falling off the laundry during the washing program are discharged with the water in the washing machine and become microplastics mixing into the natural water environment. Microplastics that enter the ecological cycle directly with drainage water can eventually accumulate in the human body through the natural food chain, which may have an impact on human health. Therefore, in some regions, the relevant standards for the content of microplastics in water drained from a washing machine are regulated. Once the filtering function of the filter fails and the washing machine is running for washing laundry, the lint that falls off the laundry may be directly discharged with the water from the washing machine, which causes a large amount of microplastics to appear in the water drained from the washing machine, and cannot meet the relevant standards.

In view of this, the present application is proposed.

### Summary

The present application is mainly to overcome the deficiencies of the prior art and provide a filtering module, a method for controlling the filter module and a washing equipment.

In order to solve the technical problems, a first object of the present application is to provide a filtering module with a long service life and being easily cleaned, and a washing equipment having the filtering module. Specifically, the following technical solutions are provided.

A filtering module, includes:
a filtering device, provided with a sewage outlet for discharging sewage carrying filtered impurities;
a recovery device, connected with the sewage outlet of the filtering device, and provided with at least two lint collection assemblies; wherein
the lint collection assemblies are configured to receive in sequence or simultaneously the sewage discharged from the filtering device and collect the filtered impurities in the sewage.

Furthermore, each of the lint collection assemblies has a collecting chamber for collecting the filtered impurities, and the collecting chamber is connected with the sewage outlet of the filtering device.

Furthermore, the filtering module further includes a sewage pipeline. A water inlet of the sewage pipe is connected with the sewage outlet of the filtering device, and a water outlet is connected with one of collecting chambers. A position of the sewage pipeline between the water inlet and the water outlet is connected with a sewage branch, and a water outlet of the sewage branch is connected withanother of the collecting chambers.

Furthermore, a branch control valve is provided in the sewage branch to control the sewage branch to be disconnected or connected.

Furthermore, a pressure detection element for detecting a water pressure in the sewage branch is provided between a water inlet of the sewage branch and the branch control valve.

Furthermore, an initial state of the branch control valve is a closed state. It is determined whether the branch control valve to be opened according to the water pressure detected by the pressure detection element.

Furthermore, a sewage control valve for controlling the sewage pipeline to be connected and disconnected is provided in the sewage pipeline.

Furthermore, the sewage control valve is arranged between the water outlet of the sewage pipeline and the water inlet of the sewage branch.

Furthermore, the recovery device includes a shell having a main chamber inside, and the lint collection assemblies are provided in the main chamber.

The sewage carrying the filtered impurities flows into the collecting chamber of the lint collection assembly, the sewage filtered by thelint collection assembly flows into the main chamber outside the collecting chamber, and the filtered impurities are collected in the collecting chamber.

A washing equipment includes a water holding barrel and the above mentioned filtering module, wherein the filtering device of the filtering module is connected to the water holding barrel.

A second object of the present application is to provide a filtering module which can automatically relieve pressure when being blocked, and a washing equipment having the filtering module. Specifically, the following technical solutions are provided.

A filtering module, includes:
a filtering device, provided with a sewage outlet for discharging sewage carrying filtered impurities;
a recovery device, connected with the sewage outlet of the filtering device, and used for receiving the sewage discharging from the filtering device;
a pressure relief device, disposed between a sewage outletof the filtering device and the recovery device, and used for relieving pressure when the sewage flowing into the recovery device is blocked.

Furthermore, the pressure relief device includes a pressure relief branch and a pressure relief valve disposed in the pressure relief branch. A water inlet of the pressure relief branch is connected between the sewage outlet of the filtering device and the recovery device. The pressure relief valve is opened to connect the pressure relief branch, so that sewage discharged from the filtering device flows into the pressure relief branch for relieving the pressure.

Furthermore, the pressure relief valve includes:
a valve body, provided with a water inlet and a water outlet;
a valve plug, movably disposed in the valve body; and
a reset member, used to apply a reset force on the valve plug to keep the valve plug blocking the water inlet.

The valve plug is configured to move under the action of the water pressure to open the water inlet, when the water pressure in the pressure relief branch reaches a preset value. The valve plug is configured to be reset to block the water inlet under the action of the reset member, when the water pressure in the pressure relief branch is decreased.

Furthermore, the valve body has a length extending along a direction of the reciprocating motion of the valve plug, the water inlet is at one end of the valve body, and the water outlet is arranged in an area of a sidewall of the valve body close to the end where the water inlet is located.

Furthermore, a pressure detection element for detecting a water pressure in the pressure relief branch is further disposed between the water inlet of the pressure relief branch and the pressure relief valve.

Furthermore, the filtering module also includes a sewage pipeline. A water inlet of the sewage pipeline is connected with the sewage outlet of the filtering device, the water outlet is connected with the recovery device, and the water inlet of the pressure relief branch is connected with the sewage pipeline. A sewage control valve controlling the sewage pipeline to be connected and disconnected is arranged on the sewage pipeline.

Furthermore, the sewage control valve is disposed between the water outlet of the sewage pipeline and the water inlet of the pressure relief branch.

Furthermore, the recovery device includes:
a shell, having a recovery chamber therein;
a lint collection assembly, disposed in the recovery chamber and forming a collecting chamber for receiving sewage. The sewage carrying the filtered impurities flows in the collecting chamber, is filtered by the lint collection assembly, and then flows into the recovery chamber outside the collecting chamber. The filtered impurities are collected in the collecting chamber.

The pressure relief device is configured to relieve pressure when the lint collection assembly is blocked by filtered impurities.

Furthermore, the pressure relief device includes the pressure relief branch, and the water inlet of the pressure relief branch is connected between the sewage outlet of the filtering device and the recovery device;

The water outlet of the pressure relief branch is connected with an external space, or the water outlet of the pressure relief branch is connected with the recovery chamber outside the collecting chamber.

A washing equipment includes a water holding barrel and the above-mentioned filtering module, wherein the filtering device of the filtering module is connected with the water holding barrel.

A third object of the present application is to provide a filtering module capable of automatically detecting a blockage state and a control method thereof, as well as a washing equipment having the filtering module. Specifically, the following technical solutions are provided.

A filtering module, includes:
a filtering device, provided with a sewage outlet for discharging sewage carrying filtered impurities;
a recovery device, connected with the sewage outlet of the filtering device, and used for receiving the sewage discharging from the filtering device; and
a blockage detection device, used to detect whether the recovery device is blocked in a process of discharging sewage from the filtering device into the recovery device.

Furthermore, the blockage detection device includes a flow detection device for detecting a flow of sewage discharged from the filtering device. It is determined by the blockage detection device whether it is blocked in the process of discharged sewage from the filtering device to the recovery device according to the flow of sewage discharged from the filtering device.

Furthermore, the filtering module also includes a sewage pipeline, the sewage outlet of the filtering device is connected with a water inlet of the sewage pipeline, and a water outlet of the sewage pipeline is connected with the recovery device. The flow detection device is disposed in the sewage pipeline.

Furthermore, the blockage detection device includes a water level detection device for detecting water level in the recovery device. It is determined by the blockage detection device whether it is blocked in the process of discharging the sewage from the filtering device into the recovery device according to the water level in the recovery device.

Furthermore, the water level detection device includes a plurality of groups of water level probes disposed at different heights inside the recovery device. A feedback signal is generated when the water level probes are in contact with water.

Furthermore, each group of water level probes includes two electrodes disposed at intervals, and a feedback signal is generated when the two electrodes are connected by water.

Furthermore, the water level detection device includes two electrode sheets extending by a length in a vertical direction. The two electrode sheets are arranged oppositely to each other at an interval. A capacitance between the two electrode sheets is changed with an area of the electrode sheets immersed in water.

Furthermore, the recovery device comprises:
a shell, having a recovery chamber therein; and
a lint collection assembly, disposed in the recovery chamber and forming a collecting chamber for receiving sewage. The sewage carrying the filtered impurities flows in the collecting chamber, is filtered by the lint collection assembly, and then flows into the recovery chamber outside the collecting chamber. The filtered impurities are collected in the collecting chamber.

The water level detection device is disposed in the recovery chamber to detect the water level outside the collecting chamber.

A method for controlling the above-mentioned filtering module, comprises: determining whether it is blocked in a process of discharging sewage from the filtering device into the recovery device according to a result detected by the blockage detection device.

Furthermore, the blockage detection device includes a flow detection device for detecting a flow of sewage discharged from the filtering device. If it is detected that the flow of sewage discharged from the filtering device is lower than a preset flow, it is determined that the process of discharging sewage from the filtering device into the recovery device is blocked.

Alternatively, the blockage detection device includes a water level detection device for detecting water level in the recovery device. If it is detected that the water level in the recovery device is greater than a preset water level, or it is detected that a change of the water level in the recovery device is less than a preset change, it is determined that the process of discharging sewage from the filtering device into the recovery device is blocked.

A washing equipment includes a water holding barrel and the above-mentioned filtering module, wherein the filtering device of the filtering module is connected with the water holding barrel.

Through the above technical solutions, there are the following beneficial effects in the present application compared with the prior art.
1. At least two groups of the lint collection assemblies are disposed in the recovery device, for collecting the filtered impurities, so it is increased in the total amount of filtered impurities collected, and there is no situation where sewage cannot flow into the recovery device. The using period of the recovery device is prolonged after being cleaned, and user can clean the lint collection assemblies separately, so it is more convenient to use.
2. A pressure relief device is disposed in the filtering module, which can relieve the increased water pressure between the filtering device and the recovery device caused by blockage in a process of discharging the sewage into the recovery device. Thereby it is avoided that the structure is damaged by excessive water pressure, and there is a function of protecting the filtering module.
3. When user cannot directly observe the status of the filtering module, it is automatically determined by the blockage detection device in the filtering module whether it is blocked in the process of discharging sewage from the filtering device into the recovery device, so that the washing equipment can detect the status of the filtering module to avoid the problem that the filtering module is blocked to and fails the filtering function.

The embodiments of the present application are further described in detail below in conjunction with the accompanying drawings.

### BRIEF DESCRIPTION OF THE DRAWINGS

The accompanying drawings are part of the present disclosure and are used to provide a further understanding of the present disclosure. The exemplary embodiments of the present disclosure and their descriptions are used to explain the present disclosure, but do not constitute an improper limitation of the present disclosure. Obviously, the drawings described below are only some embodiments. For those skilled in art, other drawings can be obtained based on these drawings without creative work. In the drawings:
FIG. 1 is a schematic structural diagram of a washing equipment according to an embodiment of the present application;
FIG. 2 is a schematic structural diagram of a filtering module and relevant waterways in Embodiments 1 to 3 of the present application;
FIG. 3 is a flow chart of a control method for a washing equipment in Embodiment 2 of the present application;
FIG. 4 is a flow chart of a control method for a washing equipment in Embodiment 3 of the present application;
FIG. 5 is a schematic structural diagram of a filtering module and relevant waterways in Embodiment 4 of the present application;
FIG. 6 is a schematic structural diagram of a filtering module and relevant waterways in Embodiment 6 of the present application;
FIG. 7 is a schematic structural diagram of a pressure relief valve in Embodiment 6 of the present application (closed state);
FIG. 8 is a schematic structural diagram of a pressure relief valve in Embodiment 6 of the present application (open state);
FIG. 9 is a schematic structural diagram of a filtering module and relevant waterways in Embodiment 7 of the present application;
FIG. 10 is a flow chart of a control method for a washing equipment in Embodiment 8 of the present application;
FIG. 11 is a schematic structural diagram of a filtering module and relevant waterways in Embodiment 9 of the present application;
FIG. 12 is a schematic structural diagram of a filtering module and relevant waterways in Example 10 of the present application;
FIG. 13 is a schematic structural diagram of a water level detection device in a recovery device in Embodiment 10 of the present application;
FIG. 14 is another schematic structural diagram of a water level detection device in a recovery device in Embodiment 10 of the present application;
FIG. 15 is a schematic structural diagram of a filtering module and relevant waterways in Embodiment 11 of the present application;
FIG. 16 is a flow chart of a control method for a washing equipment in Embodiment 12 of the present application.

In the figures: 10, Casing; 100, Water holding barrel; 110, Window pad; 220, Circulation pipeline; 230, Return pipeline; 231, Return control valve; 240, Sewage pipeline; 241, Sewage control valve; 243, Flow meter; 244, Sewage branch; 245, Pressure detection element; 246, Branch control valve; 247, Pressure relief branch; 250, External discharge pipeline; 260, Drain pipe of water holding barrel; 270, Switching device; 400, Circulation pump; 500, Recovery device; 510, Shell; 511, First water inlet; 512, Second water inlet; 531, First chamber; 532, Second chamber; 533, Main chamber; 570, Lint collection assembly; 571, First lint collection assembly; 572, Second lint collection assembly; 580, Water level detection device; 581, Water level Probe; 582, Step structure; 583, Electrode type water level detection device; 590, Pressure relief valve; 591, Valve body; 5911,Water inlet; 5912, Water outlet; 592, Valve plug; 593, Reset component; 594, Protrusion; 595, Limit part; 596, Valve seat; 597, Guiding rod; 600, Filtering device; 610, Filter chamber; 6101, Water inlet; 6102, Filtered water outlet; 6103, Sewage outlet; 620. Filtering mechanism; 621, Water outlet connector; 660, Drive mechanism; 680, Clean particles; 690, Baffle; 691, Water hole.

It should be noted that these drawings and textual descriptions are not intended to limit the conceptual scope of the present disclosure in any way, but are intended to illustrate the concept of the present disclosure for those skilled in the art by referring to specific embodiments.

### DETAILED DESCRIPTION

In order to make the purpose, technical solutions and advantages of the embodiments of the present application clearer, the technical solutions in the embodiments will be clearly and completely described below in conjunction with the drawings in the embodiments of the present application. The following embodiments are used to illustrate the present application but are not used to limit the scope of the present application.

In the description of the present application, it should be noted that the directions or positional relationships indicated by terms such as "upper", "lower", "front", "back", "left", "right", "vertical", "inside" and "outside" are based on the directions or positional relationships shown in the accompanying drawings, and are only for the convenience of describing the present application and simplifying the description, rather than indicating or implying that the device or element referred to must have a specific direction, be constructed and operated in a specific direction, and therefore cannot be understood as a limitation on the present application.

In the description of the present application, it should be noted that, unless otherwise clearly specified and limited, the terms "installed", "connected", and "connected" should be understood in a broad sense, for example, it can be a fixed connection, a detachable connection, or an integral connection; it can be a mechanical connection or an electrical connection; it can be a direct connection or an indirect connection through an intermediate medium. For ordinary technicians in this field, the specific meanings of the above terms in the present application can be understood according to specific circumstances.

### Embodiment 1

A filtering module and a washing equipment including the filtering module are described in the embodiment. The washing equipment can be a washing machine, a washer-dryer, a care machine or the devices with the function of washing laundry.

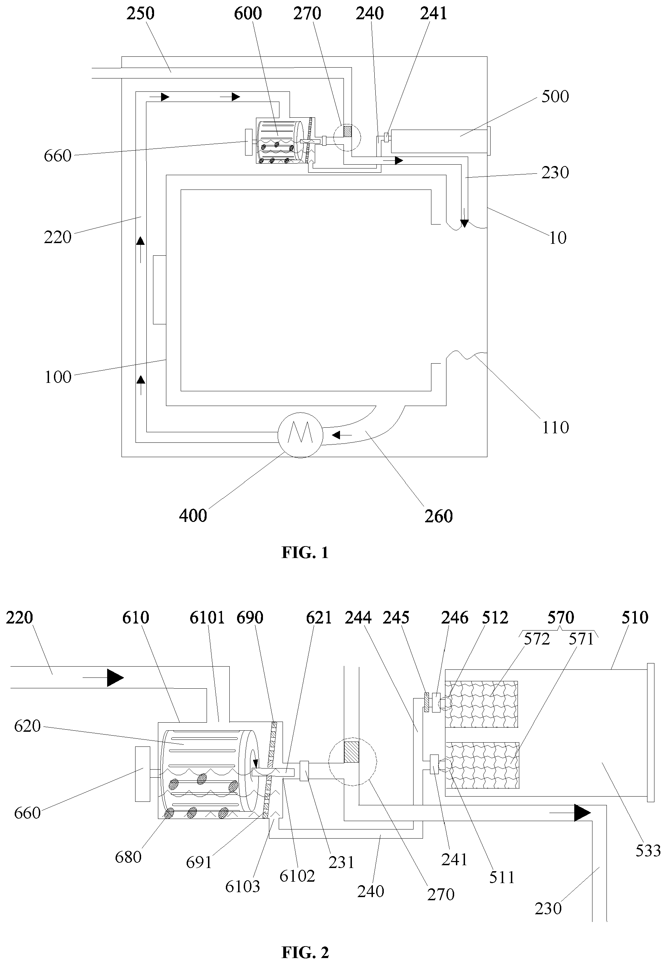

As shown in FIG. 1 and FIG. 2, the washing equipment of the embodiment includes a water holding barrel 100, and a filter module is connected with the water holding barrel 100 and can filter water from the water holding barrel 100. The filtering module specifically includes a filtering device 600 and a recovery device 500.

The filtering device 600 is connected with the water holding barrel 100, and a circulation pump 400 is arranged between the filtering device 600 and the water holding barrel 100. The water in the water holding barrel 100 can be supplied into the filtering device 600 for filtration by the circulation pump 400.The filtering device 600 has a self-cleaning function. The filtering device 600 is manually cleaned by users without being disassembled. The filtered impurities accumulated on the filtering device 600 during the filtering process can be clean by the filtering device itself and discharged with the water flow. Specifically, the filtering device 600 is provided with a sewage outlet 6103, through which sewage carrying filtered impurities after self-cleaning can be discharged, thereby preventing a lot of filtered impurities from accumulating inside the filtering device 600 and affecting the filtering efficiency.

The recovery device 500 is connected with the sewage outlet 6103 of the filtering device 600, and can receive the sewage discharged from the filtering device 600, so as to prevent the sewage discharged from the filtering device 600 from directly mixing into the water flow drained out of the washing equipment and being discharged outward. Thereby it solves the problem that microplastics in the filtered impurities are drained into the ecological cycle with the water flow.

**In** the embodiment, at least two lint collection assemblies 570 are provided inside the recovery device 500, and each of the lint collection assemblies 570 independently receives sewage discharged from the filtering device and collects filtered impurities in the sewage. Each of the lint collection assemblies 570 has a collecting chamber for collecting filtered impurities, and each collecting chamber is connected with the sewage outlet 6103 of the filtering device 600.

Specifically, a first lint collection assembly 571 and at least one second lint collection assembly 572 are provided in the recovery device 500 of the embodiment. Each of the first lint collection assembly 571 and the second lint collection assembly572 independently receives sewage discharged from the filtering device 600 and collects filtered impurities in the sewage.

Furthermore, the first lint collection assembly 571 has a first collecting chamber for collecting filtered impurities, and the second lint collection assembly 572 has a second collecting chamber independent from the first collecting chamber. The first collecting chamber and the second collecting chamber are respectively connected with the sewage outlet 6103 of the filtering device 600. The second collecting chamber is independent from the first collecting chamber, which means that the sewage discharged from the filtering device 600 directly enters the second collecting chamber without entering the first collecting chamber.

**In** the above solutions, the recovery device 500 can preferentially utilize the first lint collection assembly 571 to receive the sewage discharged from the filtering device 600. When the first lint collection assembly 571 is full and can no longer receive sewage, one or more second lint collection assembly 572 can also be utilized to continue to receive sewage, thereby avoiding the process of discharging sewage discharge from the filtering device 600 is forced to stop.

In the embodiment, the recovery device 500 further includes a shell 510 having a main chamber 533 inside. Both the first lint collection assembly 571 and the second lint collection assembly 572 are provided in the main chamber 533. The first lint collection assembly 571 and the second lint collection assembly 572 can respectively filter the sewage.

Specifically, when the sewage carrying filtered impurities enters the first collecting chamber of the first lint collection assembly 571, the sewage can be filtered by the first lint collection assembly 571 and flow into the main chamber 533 outside the first collecting chamber, and the filtered impurities are collected in the first collecting chamber. When the sewage carrying filtered impurities enters the second collecting chamber of the second lint collection assembly 572, the sewage can be filtered by the second lint collection assembly 572 and flow into the main chamber 533 outside the second collecting chamber, and the filtered impurities are collected in the second collecting chamber.

As shown in FIG. 2, it is a top view of the recovery device 500 in which one second lint collection assembly 572 is provided, and the first lint collection assembly 571 and the second lint collection assembly 572 are horizontally distributed in the shell 510, so that water filtered by either the first lint collection assembly571 or the second lint collection assembly 572 does not drip onto the other.

In detail, a first water inlet 511 and a second water inlet 512 are provided on the shell 510 of the recovery device 500. The first water inlet 511 and the second water inlet 512 are both provided on the right sidewall of the shell 510 and are connected with the sewage outlet 6103 of the filtering device 600 through pipelines. The first lint collection assembly 571 includes a filter mechanism forming the first collecting chamber. The filter mechanism is disposed close to the right sidewall of the shell 510 and is in connection with the first water inlet 511. The structure of the second lint collection assembly 572 is similar to that of the first lint collection assembly 571, and also includes a filter mechanism forming the second collecting chamber. The filter mechanism is disposed close to the right sidewall of the shell 510 and is in connection with the second water inlet 512.

The shell 510 is installed in the casing 10 of the washing equipment in an insertable/extractable manner, and an upper side of the shell 510 is an opening. The first lint collection assembly 571 and the second lint collection assembly 572 are detachably installed inside the shell 510, and can be detached from the shell by user for cleaning. So it is more convenient to clean.

In the above solutions, the sewage discharged from the filtering device 600 can be filtered in the recovery device 500, the filtered impurities are collected inside the first lint collection assembly 571 or the second lint collection assembly 572, and the water without filtered impurities is collected in the main chamber 533 of the recovery device 500. The filtered impurities are separated from the sewage by the first lint collection assembly 571 and the second lint collection assembly 572, so that user can directly remove the collected filtered impurities. Thereby, it is avoided that the filtered impurities are mixed in the water and cannot be effectively removed.

**In** a preferred solution of the embodiment, a water outlet in connection with the main chamber 533 may be provided on the shell 510, so that water in the main chamber 533 of the recovery device 500 can be discharged through the water outlet. Since the filtered water in the main chamber 533 does not carry filtered impurities, it can flow back into the water holding barrel 100 for reuse, or be directly discharged into the external discharge pipeline 250 of the washing equipment, without causing the problem that micro-lint contained in the filtered impurities enters in the ecological cycle.

In a further solution of the embodiment, in order to enable the filtering device 600 to discharge sewage into the recovery device 500, the filtering module further includes a sewage pipeline 240. A water inlet of the sewage pipeline 240 is connected with the sewage outlet 6103 of the filtering device 600, and a water outlet is connected with the first water inlet 511 and in connection with the first collecting chamber inside the first lint collection assembly 571. A position of the sewage pipeline 240 between the water inlet and the water outlet is connected with a sewage branch 244, and a water outlet of the sewage branch 244 is connected with the second water inlet 512 and is in connection with the second collecting chamber inside the second lint collection assembly 572.

A branch control valve 246 is provided in the sewage branch 244 to control the sewage branch 244 to be disconnected or connected. When the branch control valve 246 is in a closed state, the sewage branch 244 is not disconnected, and the sewage discharged from the filtering device 600 enters the first collecting chamber along the sewage pipeline 240. When the branch control valve 246 is opened, the sewage branch 244 is connected, and the sewage discharged from the filtering device 600 can bypass the first lint collection assembly571 and enter the second collecting chamber along the sewage branch 244.

In the embodiment, the second lint collection assembly 572 is used as an auxiliary collection assembly. When the first lint collection assembly 571 is blocked by filtered impurities and cannot further filter the sewage, the branch control valve 246 can be opened to deliver the sewage discharged from the filtering device 600 into the second lint collection assembly 572.

Furthermore, the filtering module in the embodiment can monitor whether the first lint collection assembly 571 is blocked, and then automatically control the branch control valve 246 to be opened.

Specifically, a pressure detection element 245 for detecting the water pressure in the sewage branch 244 is provided between the water inlet of the sewage branch 244 and the branch control valve 246. An initial state of the branch control valve 246 is a closed state. It is determined whether the branch control valve 246 to be opened according to the water pressure detected by the pressure detection element 245.

In the initial state, the first lint collection assembly 571 is not blocked, and the sewage discharged from the filtering device 600 can smoothly enter the first collecting chamber of the first lint collection assembly 571. At this time, there is almost no water in the sewage branch 244. Once the first lint collection assembly 571 is block, the sewage cannot flow into the main chamber 533 through the first lint collection assembly 571 and will quickly fill the first collecting chamber.

When the first collecting chamber is nearly full, the sewage cannot further flow into the first collecting chamber, but flows into the sewage branch 244. If the filtering device 600 continues to discharge the sewage and the branch control valve 246 is in a closed state, the water pressure in the sewage branch 244 rises rapidly. When it is detected by the pressure detection element 245 that the water pressure exceeds a preset pressure, the branch control valve 246 is opened, the sewage is discharged into the second collecting chamber inside the second lint collection assembly 572.

In the above solutions, by the arrangement of the pressure detection element 245 for detecting the water pressure in the sewage branch 244, the blockage of the first lint collection assembly 571 can be detected in time, and then the branch control valve 246 can be automatically controlled to open, so that the sewage in the filtering device 600 can continue to be discharged to the outside. The pressure detection element 245 is cooperated with the branch control valve 246, so it is automatically controlled whether the second lint collection assembly 572 is used, which is more intelligent.

In a further solution of the embodiment, a sewage control valve 241 for controlling the sewage pipeline 240 to be connected and disconnected is provided in the sewage pipeline 240. The sewage control valve 241 is specifically arranged between the water outlet of the sewage pipeline 240 and the water inlet of the sewage branch 244.

When the filtering device 600 filters the water, the sewage control valve 241 is in a closed state, and the branch control valve 246 is in a closed state, so that the sewage outlet 6103 of the filtering device 600 is not connected with the recovery device 500, and the filtered water can only be discharged from the filtering device 600 to the outside through the filtered water outlet 6102.

The sewage control valve 241 is opened when the filtering device 600 needs to discharge the sewage, or the branch control valve 246 is opened when the water pressure is detected to rise to a preset pressure by the pressure detection element 245, so that the sewage can be discharged into the recovery device 500 from the filtering device 600.

It should be noted that, the sewage control valve 241 is arranged between the water outlet of the sewage pipeline 240 and the water inlet of the sewage branch 244. When the sewage control valve 241 is closed, the water pressure in the sewage branch 244 may be relatively high. Therefore, in the embodiment, only when the sewage control valve 241 is opened, the pressure detection element 245 is controlled to work and detect the water pressure in the sewage branch 244, so that it can be avoided that the branch control valve 246 is mistakenly opened when the filtering device 600 runs to filter.

In the embodiment, a first lint collection assembly 571 and a second lint collection assembly 572 are provided in the recovery device 500. When the first lint collection assembly 571 is blocked, the second lint collection assembly 572 can also filter the sewage discharged from the filtering device 600. When the first lint collection assembly 571 is blocked, the filtering device can continue to work, and the filter efficiency is not reduced due to the failure of the filtering device 600 to discharge the filtered impurities. By arranging the pressure detection element 245 and the branch control valve 246 in the sewage branch 244, it is automatically controlled whether the second lint collection assembly 572 is used, and the degree of automation is higher for a washing equipment.

In a further solution of the embodiment, the filtering device 600 specifically includes:
a filter chamber 610, provided with a water inlet 6101, a filtered water outlet 6102 and a sewage outlet 6103, wherein the water inlet 6101 is in connection with the water holding barrel 100 to allowing water to flow in, and the filtered water outlet 6102 is used to discharge the filtered water;
a filtering mechanism 620, rotatably disposed inside the filter chamber 610 and having a water outlet connector 621 rotatably and sealingly connected with the filtered water outlet 6102; and
a drive mechanism 660, connected with the filtering mechanism 620 and used for driving the filtering mechanism 620 to rotate in the filter chamber 610.

An interior of the filter chamber 610 is divided into an outer chamber and an inner chamber by the filtering mechanism 620. The water inlet 6101 is connected with the outer chamber, and the filtered water outlet 6102 is connected with the inner chamber. The water in the water holding barrel 100 is driven to flow into the outer chamber through the water inlet 6101 by the circulation pump 400, passes through the filtering mechanism 620 and enters the inner chamber for filtration. The impurities carried in the water are attached to an outer side of the filtering mechanism 620. The water after being filtered out the impurities can flow out from the filtered water outlet 6102 through the water outlet connector 621.

In detail, the filtering mechanism 620 includes a filter frame and a filtering screen for covering the filter frame. One end of the filter frame is extended into the filtered water outlet 6102 to form the water outlet connector 621. A hole size of the filtering screen meets: the filtered impurities such as lint with a size of larger than 17µm+2µm in diameter and larger than 500µm±50µm in length can be removed from water.

When it is necessary to remove the filtered impurities inside the filtering device 600, the filtering mechanism 620 is driven to rotate through the drive mechanism 660, to stir the water flow in the filter chamber 610, so that the filtered impurities attached to the outer side the filtering mechanism 620 are peeled off under the dual effects of centrifugal force and agitated water flow, mixed into the water in the filter chamber 610, and then discharged from the sewage outlet 6103 of the filter chamber 610 along the water flow.

Clean particles 680 are also disposed between the inner side of the filter chamber 610 and the outer side the filtering mechanism 620 for cleaning the inner side of the filter chamber 610 and the outer side the filtering mechanism 620 by friction and collision along with the water flow. During the filtering process, the clean particles 680 continuously rub on the inner side of the filter chamber 610 and the outer side the filtering mechanism 620 with the water flow, to cause the filtered impurities to peel off, thereby preventing the filtered impurities being accumulated to too quickly cover the filtering mechanism 620 and affect the filtering efficiency. On the other hand, it is also avoided that it is difficult to remove the filtered impurities from the filtering device 600 because the filtered impurities are too thick and too firmly attached to the inner side of the filter chamber 610 or the outer side of the filtering mechanism 620.

When the drive mechanism 660 drives the filtering mechanism 620 to rotate in the filter chamber 610 for self-cleaning, the clean particles 680 move in the filter chamber 610 along the agitated water flow, and rub on the inner side of the filter chamber 610 and the outer side of the filtering mechanism 620, thereby improving the efficiency of peeling off the filtered impurities and achieving a better self-cleaning effect of the filtering device 600.

A baffle 690 is further disposed in the filter chamber 610, and a water hole 691 is formed on the baffle 690. The clean particles 680 are disposed in a side of the baffle 690 (i.e., the left side in FIG. 2), and both the filtered water outlet 6102 and the sewage outlet 6103 on the filter chamber 610 are located in the other side of the baffle 690 (i.e., the right side in FIG. 2).

By arrangement of the baffle 690, the clean particles 680 can be prevented from gathering toward the filtered water outlet 6102 during the filtration process. When the filtering device 600 is self-cleaned and the sewage is discharged, the sewage carrying filtered impurities can pass through the water hole 691 of the baffle 690 and be discharged from the sewage outlet 6103, while the clean particles 680 are blocked by the baffle 690 and are not discharged from the sewage outlet 6103 with the water flow. Thereby the loss of the clean particles 680 is avoided. And it can be also prevented the clean particles 680 from accumulating in the sewage outlet 6103 to block the sewage outlet 6103 and affect the sewage discharge efficiency.

The washing equipment of the embodiment specifically includes a circulation filtration pipeline of which a water inlet and a water outlet are respectively connected with the water holding barrel 100, and both the filtering device 600 and the circulation pump 400 are disposed in the circulation filtration pipeline. In the washing program of the washing equipment, the circulation pump 400 is turned on to drive the water in the water holding barrel 100 to flow along the circulation filtration pipeline into the filtering device 600 and then flow back to the water holding barrel 100 after being filtered.

In detail, a bottom of the water holding barrel 100 is connected with a drain pipe 260 of the water holding barrel, the drain pipe 260 of the water holding barrel is connected with an inlet end of the circulation pump 400, an outlet end of the circulation pump 400 is connected with the circulation pipeline 220, and the circulation pipeline 220 is connected with the water inlet 6101 of the filtering device 600. The filtered water outlet 6102 of the filtering device 600 is connected with the water holding barrel 100 through a return pipeline 230. A water outlet of the return pipeline 230 is specifically connected with a window pad 110 at an opening of the water holding barrel 100, and water flows back to the water holding barrel 100 through the window pad 110.

In a further solution of the embodiment, a switching device 270 is disposed between the filtered water outlet 6102 of the filtering device 600 and the return pipeline 230, and a water inlet of the switching device 270 is connected with the filtered water outlet 6102 of the filtering device 600. The switching device 270 has a first water outlet and a second water outlet. The first water outlet is connected with the return pipeline 230, and the second water outlet is connected with the external discharge pipeline 250 for discharging water to the outside of the washing equipment. A switching mechanism is disposed inside the switching device 270 for controlling one of the first water outlet and the second water outlet to be connected with the water inlet. The water in the washing equipment is discharged after being filtered by the filtering device 600, so that there is almost no microplastic in the drained water.

By the arrangement of the switching device 270, one filtering device 600 is disposed in the washing equipment to realize two filtering functions, namely, a circulation filtering during the washing program of the washing equipment and a drainage filtering during the drainage process of the washing equipment. The circulation filtering and the drainage filtering share one circulation pump 400 and part of the pipeline structure, which simplifies the structure of the waterways inside the washing equipment. By controlling the connection pattern of the switching device 270, the circulation filtering and the drainage filtering can be switched with each other, and the control logic is simple.

Preferably, a return control valve 231 is further disposed outside the filtered water outlet 6102 of the filtering device 600 to control the filtered water outlet 6102 to be connected with or disconnected from the switching device 270. When the filtering device 600 runs filtering (including the circulation filtering and the drainage filtering), the return control valve 231 is in an open state. When the filtering device 600 is controlled to discharge sewage, the return control valve 231 is closed, so that sewage in the filtering device 600 cannot be discharged from the filtered water outlet 6102, thereby the sewage in the filtering device 600 is fully discharged from the sewage outlet 6103.

In the embodiment, in the washing program of the washing equipment, the filtering device 600 performs the circulation filtering to remove impurities such as lint in the water, thereby ensuring the washing effect of the laundry. During the drainage process, the filtering device 600 performs the drainage filtering, so that the water is filtered by the filtering device 600 and then is discharged to the outside, thereby reducing the microplastic content in the drained water to the greatest extent and avoiding the impact on the ecological environment caused by water drained from a washing equipment.

### Embodiment 2

As shown in FIG. 1 and FIG. 2, a method of the embodiment for controlling the washing equipment described in Embodiment 1, includes:
running a washing program of the washing equipment and performing an additional program of filtering the washing water in a filtering device 600; and
determining that a second lint collection assembly 572 in a recovery device 500 is used, and sending a prompt message.

Specifically, an operation of performing the additional program in the washing equipment in the embodiment specifically includes: the circulation pump 400 running to drive water to flow into the filtering device 600 for filtering, and performing an operation of discharging sewage into the recovery device 500 from the filtering device 600 according to a set program.

The operation of discharging sewage discharge according to the set program refers to that the sewage control valve 241 is opened to discharge sewage into the recovery device 500 after the filtering device 600 runs for filtering for a time.

In the solutions of the embodiment, when the second lint collection assembly 572 is use, it is indicated that the first lint collection assembly 571 is blocked and filled with sewage, and can no longer continue to receive sewage discharged from the filtering device 600. The second lint collection assembly 572 can be used to receive sewage and allow the washing equipment to complete the current washing program. But if user does not clean the recovery device 500 after the current washing program is completed, and the washing program is performed again and the additional program of filtering water in the filtering module is performed, it is high possibility that the second lint collection assembly 572 is blocked to cause the recovery device 500 not to continue to receive sewage.

In the embodiment, it is monitored whether the second lint collection assembly572 is use during the washing program of the washing equipment, and further a prompt message can be sent to user when the second lint collection assembly 572 is used, so user is reminded to clean the recovery device 500 after the current washing program is completed. It is ensured that the washing equipment can completely perform the additional program when a next washing program is performed.

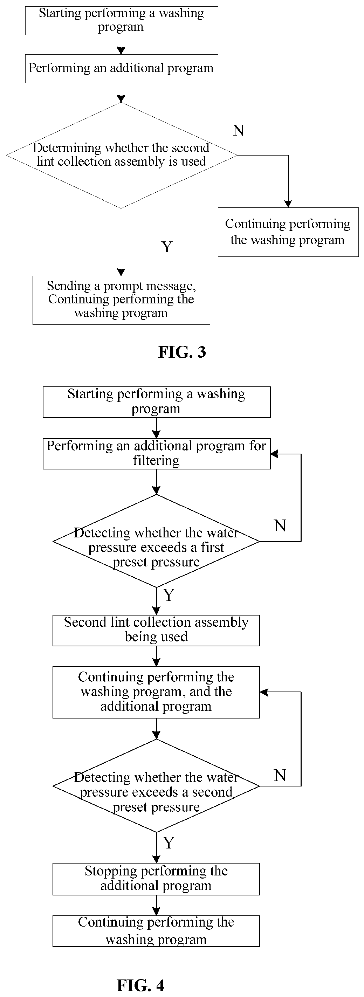

Specifically, the method for controlling the washing equipment in the embodiment is shown in FIG. 3 and includes:
S11, Starting performing a washing program;
S12, performing an additional program to guide water to the filtering device 600 for filtering;
S13, determining whether the second lint collection assembly 572 is used, if so, sending a prompt message and then executing S14, otherwise directly executing step S14;
S14, the washing program continuing being performed.

Furthermore, in the embodiment, the second lint collection assembly 572 is controlled to be used or not by controlling the branch control valve 246 to be in open/closed state. It is determined that the branch control valve 246 is opened based on the water pressure detected by the pressure detection element 245.

In S13 of the method of the embodiment, when the sewage control valve 241 is in open state and the water pressure detected by the pressure detection element 245 exceeds a preset pressure, the branch control valve 246 is opened, and it is determined that the second lint collection assembly 572 is used, and a prompt message is sent to remind user to clean the recovery device 500 after the current washing program is completed.

In detail, for a washing equipment, it may be determined that the second lint collection assembly 572 is used after receiving a message indicating that the water pressure exceeds a preset pressure. Alternatively, after receiving a message indicating that the water pressure exceeds a preset pressure, the washing equipment controls the branch control valve 246 to be open. When receiving a message indicating that the branch control valve 246 is in an open state, it is determined that the second lint collection assembly 572 is used.

In the embodiment, the washing equipment sends a prompt message to user after the second lint collection assembly 572 is used, so that user can get the current status of the recovery device 500 in time, thereby reminding user to clean the recovery device 500 after the washing program is completed. So it is avoided that user forgets to clean the recovery device 500 to cause the recovery device 500 not to receive the sewage discharged from the filtering device 600 during the washing program and not to continue performing the additional program to implement the filtering function.

### Embodiment 3

As shown in FIG. 1 and FIG. 2, a method of the embodiment for controlling a washing equipment described in Embodiment 1, includes:
running a washing program of the washing equipment and performing an additional program of filtering the washing water in a filtering module;
obtaining a current filtering capability of the filtering module; and
determining that the current filtering capability of the filtering module is lower than a first filtering threshold, and stopping performing the additional program.

Specifically, an operation of performing the additional program in the washing equipment in the embodiment specifically includes: the circulation pump 400 running to drive water to flow into the filtering device 600 for filtering, and performing an operation of discharging sewage into the recovery device 500 from the filter device 600 according to a set program.

The operation of discharging sewage discharge according to the set program refers to that the sewage control valve 241 is opened to discharge sewage into the recovery device 500after the filtering device 600 runs for filtering for a time.

In the embodiment, the filtering capacity of the filtering module specifically refers to a remaining filtering capacity of the recovery device 500, which can be determined by monitoring whether the first lint collection assembly 571 and/or the second lint collection assembly 572 is blocked.

In the embodiment, the current filtering capacity of the filtering module is lower than the first filtering threshold corresponding to a situation where both the first lint collection assembly 571 and the second lint collection assembly 572 are blocked, and the recovery device 500 can no longer receive the sewage discharged from the filtering device 600. If the additional program is continuously performed, the filtering device 600 will soon be blocked because the filtered impurities accumulated in the filtering device 600 cannot be discharged.

Therefore, in the embodiment, when both the first lint collection assembly 571 and the second lint collection assembly 572 are blocked, the additional program is controlled to stop performing, that is, water no longer flows into the filtering device 600.

Furthermore, before determining that the current filtering capacity of the filtering module is lower than the first filtering threshold, there is also a process determining that the current filtering capacity of the filtering module is lower than a second filtering threshold, using the second lint collection assembly 572, and continuing performing the washing program and the additional program.

The current filtering capacity of the filtering module is lower than the second filtering threshold corresponding to a situation where the first lint collection assembly 571 is blocked and filled with sewage. The sewage can no longer flow into the first collecting chamber of the first lint collection assembly 571. At this time, the branch control valve 246 is opened and the second lint collecting assembly 572 is used, so that the recovery device 500 can continue to receive the sewage discharged from the filtering device 600, and the additional program can continue being performed.

**In** a further solution of the embodiment, after the additional program is stopped being performed, the washing program continues being performed. That is, when it is determined that the recovery device 500 can no longer receive the sewage discharged from the filtering device 600, only the filtering module is controlled to stop running, and the washing program continues being performed until it ends.

**In** this way, the filtering device 600 is prevented from being further blocked, and the washing program can be completed without any operation by user, so a higher degree of automation is achieved. **In** particular, when user is not waiting beside the washing equipment, the washing program is not stopped due to blockage of the recovery device 500, thereby avoiding user complaints on the inability to complete the washing program.

Furthermore, an operation of stopping performing the additional program described in the embodiment includes: the circulation pump 400 being not turned on for circulation filtrating in a subsequent stage of the washing program, and the circulation pump 400 being only turned on for drainage filtrating during the drainage process.

**In** the washing equipment of the embodiment, the water flow can only be discharged after passing through the filtering device 600, so it is inevitable to perform drainage filtering during the drainage process. Compared with the washing/rinsing process the filtering device 600 runs continuously for a shorter time during the drainage process, so the water flow is filtered without discharging sewage, and the filter device 600 isn't completely blocked.

**In** the embodiment, the washing equipment can determine whether the first lint collection assembly 571 is blocked according to the water pressure detected by the pressure detecting element 245, and then control whether to open the branch control valve 246 to make the second lint collection assembly 572 used. Similarly, it is further determined whether the second lint collection assembly 572 is blocked according to the water pressure of the sewage branch 244 detected by the pressure detection element 245.

Specifically, when the branch control valve 246 is in a closed state, if the water pressure detected by the pressure detection element 245 exceeds a first preset pressure, it is determined that the first lint collection assembly 571 is blocked, and the branch control valve 246 is controlled to open, and the sewage discharged from the filtering device 600 flows through the second lint collection assembly 572.

The washing equipment continues running the washing program, and the branch control valve 246 is opened when the filtering device 600 performs an operation of discharging sewage each time. When the branch control valve 246 is in an open state, if the water pressure detected by the pressure detection element 245 exceeds a second preset pressure, it is determined that the second lint collection assembly 572 is blocked, and the additional program is stopped performing.

In detail, a method for controlling a washing equipment is shown in FIG. 4 and includes the following steps:
S21, Starting performing a washing program;
S22, performing an additional program to guide water to the filtering device 600 for filtering;
S23, opening the branch control valve 246 to make the second lint collection assembly 572 used, when the water pressure detected by the pressure detection element 245 exceeds a first preset pressure;
S24, continuing performing the washing program, and the additional program;
S25, stopping performing the additional program, when the water pressure detected by the pressure detection element 245 exceeds a second preset pressure;
S26, continuing performing the washing program.

**In** the above solutions, the additional program is stopped performing, that is, only the circulation filtering is no longer performed, but the drainage filtering still needs to be performed in the drainage process. Thus the second preset pressure is smaller than the first preset pressure.

When the water pressure detected by the pressure detection element 245 exceeds the first preset pressure, the first lint collection assembly 571 is completely blocked and filled with sewage. At this time, the second lint collection assembly572 is used to ensure full utilization of the filtering capacity of the first lint collection assembly 571.

When the water pressure detected by the pressure detection element 245 exceeds the second preset pressure which is less than the first preset pressure, the second lint collection assembly 572 is blocked, but is not completely filled with sewage and still has a space for continuing receiving sewage. In this way, when the discharge filtering is performed in the subsequent washing program, a small amount of sewage can still be discharged into the recovery device 500.Thereby the filtered impurities is reduced in being accumulated in the filtering device 600 and avoided blocking the filtering device 600.

In the embodiment, in performing the washing program of the washing equipment, when the first lint collection assembly 571 is filled with sewage, the second lint collection assembly 572 can be used. When the second lint collection assembly 572 is also blocked, the circulation filtering is no longer performed, but the washing program continues being performed, and the drainage filtering is performed during the drainage process. In this way, the filter device 600 is avoided continuing to run to be blocked on a situation where the filtered impurities cannot be discharged, and it is ensured that the washing program is completed without user's operation, thereby improving the degree of automation of the washing equipment.

### Embodiment 4

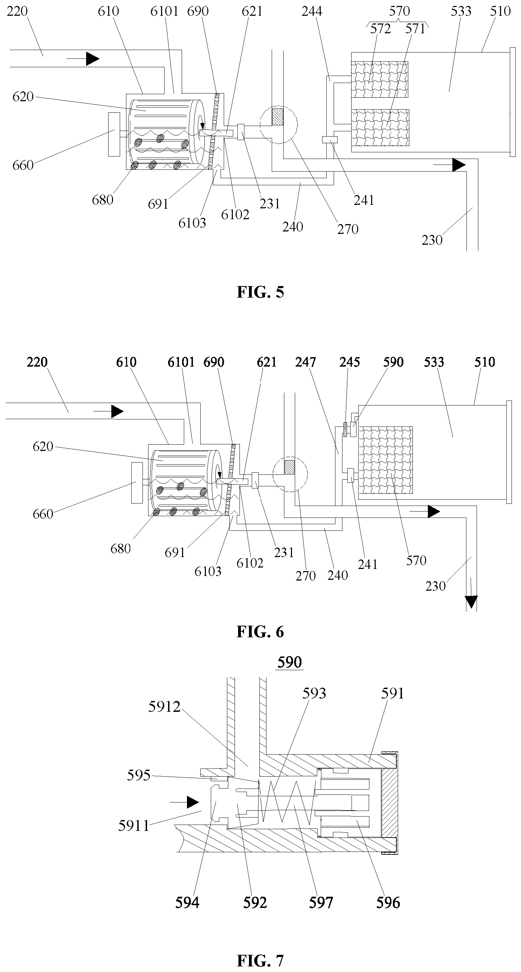

As shown in FIG. 1 and FIG. 5, the difference between the embodiment and Embodiment 1 is that, the first lint collection assembly 571 and the second lint collection assembly 572 in the recovery device 500 together receive the sewage discharged from the filtering device 600 and collect the filtered impurities in the sewage.

Specifically, in the embodiment, an operation that the first lint collection assembly 571 and the second lint collection assembly 572 receive sewage together, specifically means, the sewage can enter the first lint collection assembly 571 and the second lint collection assembly 572 when the sewage in the filtering device 600 is discharged to the outside. The second collecting chamber of the second lint collection assembly572 is still independently from the first collecting chamber of the first lint collection assembly 571.

Furthermore, in the embodiment, the sewage control valve 241 in the sewage pipeline 240 is disposed between the water inlet of the sewage pipeline 240 and the water inlet of the sewage branch 244, and the sewage branch 244 is no longer separately provided with a control valve for controlling to being connected and disconnected. When the sewage control valve 241 is opened, the first collecting chamber of the first lint collection assembly 571 and the second collecting chamber of the second lint collection assembly 572 are simultaneously connected with the sewage outlet of the filtering device 600, and the sewage discharged from the filtering device 600 can enter the first collecting chamber and the second collecting chamber.

In the embodiment, there is no sequence between the first lint collection assembly 571 and the second lint collection assembly 572 in the recovery device 500 in receiving sewage for filtering. When the sewage control valve 241 is opened to discharge sewage from the filtering device 600, the sewage pipeline 240 is connected with the sewage branch 244, and the sewage can flow into the first lint collection assembly 571 and the second lint collection assembly 572.

Through the above method, the first lint collection assembly 571 and the second lint collection assembly 572 together receive the sewage discharged from the filtering device 600, which is beneficial to extend the service life of the recovery device 500.At the same time, the first lint collection assembly 571 is used in a similar frequency with the second lint collection assembly 572, and the first lint collection assembly 571 is not used more frequently and no need of frequent maintenance.

### Embodiment 5

Based on the above-mentioned Embodiment 1, it is further described in the embodiment. Multiple of the second lint collection assemblies are provided, and the first lint collection assembly and the second lint collection assemblies independently receive the sewage discharged from the filtering device, and the second lint collection assemblies receive the sewage discharged from the filtering device together.

Specifically, the sewage outlet of the filtering device is connected with the first collecting chamber of the first lint collection assembly through a sewage pipeline, and a sewage control valve is arranged on the sewage pipeline. A sewage branch is connected between the water inlet of the sewage pipeline and the sewage control valve. The sewage branch includes a main section connected with the sewage pipeline, and several branch sections respectively connected with the main section. The several branch sections are connected one-to-one with the second collecting chambers of the second lint collection assemblies.

The branch control valve and the pressure detection element are both disposed in the main section of the sewage branch. In the initial state, the branch control valve is in closed state, and the sewage discharged from the filtering device flows to the first lint collection assembly. When the first lint collection assembly is blocked, the sewage flows into the main section of the sewage branch to increase the water pressure therein. When the water pressure detected by the pressure detection element exceeds the preset pressure, the branch control valve is opened, and the sewage discharged from the filtering device can flow into the second lint collection assemblies from the various branch sections of the sewage branch.

In the embodiment, by arrangement of the second lint collection assemblies, the total amount of filtered impurities collected in the recovery device is further increased. When the first lint collection assembly is blocked, the second lint collection assemblies can substantially synchronously receive the sewage discharged from the filtering device for filtering. On the one hand, there is no need to individually control each of the second lint collection assemblies to receive the sewage, and the structure is simple. On the other hand, the usage frequency of each of the second lint collection assemblies is similar, thus the degree of wear in using is basically the same, which makes it convenient for users to perform overall maintenance or replacement after a period of use.

### Embodiment 6

As shown in FIGs. 1 and 6, the difference between the embodiment and Embodiments from 1 to 5 is that the filtering module also includes a pressure relief device. The pressure relief device is disposed between a sewage outlet 6103 of the filtering device 600 and the recovery device 500, and is used for relieving pressure when the sewage flowing into the recovery device 500 is blocked.

Since the sewage in the recovery device 500 carries the filtered impurities, it is possible that the filtered impurities may block the recovery device 500, so the sewage discharged from the filtering device 600 in a latter process cannot flow into the recovery device 500. In particular, if the circulation pump 400 runs at this time to continuously deliver water in the water holding barrel 100 to the filtering device 600, and the filtering device 600 cannot drain sewage to the recovery device 500, the water pressure inside the filtering device 600 and in a space between the filtering device 600 and the recovery device 500 is increased significantly. In severe cases, the waterways may be damaged.

By the arrangement of the pressure relief device, excessive water pressure can be released in time, thereby avoiding structural damage caused by excessive water pressure and protecting the filtering module.

Specifically, the recovery device 500 in the embodiment includes a shell 510 having a recycling chamber therein, and a lint collection assembly 570 disposed in the recycling chamber. The lint collection assembly 570 forms a collecting chamber for receiving sewage, and divides the recovery chamber into a collecting chamber of the lint collection assembly 570 and a main chamber 533 outside the lint collection assembly 570. The sewage carrying filtered impurities discharged from the filtering device 600 flows into the collecting chamber, is filtered by the lint collection assembly 570, and then flows into the main chamber 533 outside the lint collection assembly 570. The filtered impurities are collected in the collecting chamber.

The shell 510 is installed in the casing 10 of the washing equipment in an insertable/extractable manner, and an upper side of the shell 510 is an opening. The lint collection assembly 570 is detachably installed inside the shell 510, and can be detached from the shell by user for cleaning. So it is more convenient to clean.

In the above solutions, the sewage discharged from the filtering device 600 can be filtered in the recovery device 500, and the filtered impurities are collected in the collecting chamber of the lint collection assembly 570, and the water without filtered impurities is collected in the main chamber 533 outside the lint collection assembly 570. The filtered impurities are separated from the sewage by the lint collection assembly 570, so that user can directly remove the collected filtered impurities. Thereby it is avoided that the filtered impurities are mixed in the water and cannot be effectively removed.

In the embodiment, the pressure relief device is mainly used to relieve pressure when the lint collection assembly 570 is blocked by the filtered impurities. The filtered impurities are mainly collected in the interior of the lint collection assembly 570, while water that accounts for most of the sewage is in the main chamber 533 outside the lint collection assembly 570, so the volume of the interior of the lint collection assembly 570 is relatively smaller. When the lint collection assembly 570 is blocked by the filtered impurities, the sewage cannot subsequently be filtered by the lint collection assembly 570 and flows into the main chamber 533, and will soon fill the collecting chamber of the lint collection assembly 570. So it is impossible for subsequent sewage to flow in, and the pressure relief device is required to relieve the pressure.

In a specific solution of the embodiment, the pressure relief device includes a pressure relief branch 247 and a pressure relief valve 590 disposed in the pressure relief branch 247. The sewage outlet 6103 of the filtering device 600 is connected with the recovery device 500 through a sewage pipeline 240, and a water inlet of the pressure relief branch 247 is connected with the sewage pipeline 240 between the sewage outlet 6103 of the filtering device 600 and the recovery device 500. The pressure relief valve 590 is opened to connect the pressure relief branch 247, so the sewage discharged from the filtering device 600 flows into the pressure relief branch 247 for relieving the pressure.

In the above solutions, when it is required to relieve the pressure, the pressure relief valve 590 is opened to connect the pressure relief branch 247, and the sewage in the sewage pipe 240 can flow in the pressure relief branch 247. The sewage in the filtering device 600 can be discharged along the pressure relief branch 247, thereby reducing the water pressure in the sewage pipe 240.

In a further solution of the embodiment, a water outlet of the pressure relief branch 247 is connected with the main chamber 533 outside the lint collection assembly 570. That is, the sewage is still discharged into the recovery device 500, but does not flow in the collecting chamber of the lint collection assembly 570, and directly flows into the main chamber 533 outside the lint collection assembly 570. The purpose of pressure relief is achieved, and it is avoided that the sewage carrying filtered impurities is discharged at will.

In the embodiment, the pressure relief valve 590 is a normally closed valve, which can be automatically opened when the water pressure reaches a certain value. There is no need of additionally controlling the pressure relief valve.

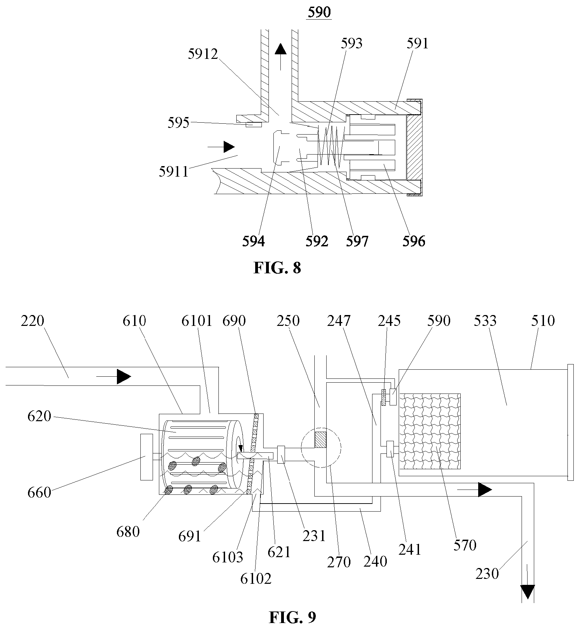

Specifically, as shown in FIG. 7 and FIG. 8, the pressure relief valve 590 includes a valve body 591, a valve plug 592 and a reset member 593.The valve body 591 is provided with a water inlet 5911 and a water outlet 5912. The valve plug 592 is movably disposed in the valve body 591. The reset member 593 is used to apply a reset force on the valve plug 592 to keep the valve plug 592 blocking the water inlet 5911.

When the water pressure in the pressure relief branch 247 reaches a preset value, the valve plug 592 moves under the action of the water pressure to open the water inlet 5911.When the water pressure in the pressure relief branch 247 is decreased, the valve plug 592 is reset to block the water inlet 5911 under the action of the reset member 593.

Furthermore, the valve body 591 has a length extending along a direction of the reciprocating motion of the valve plug 592, the water inlet 5911 is at one end of the valve body 591 (i.e., a left end in FIG. 7), and the water outlet 5912 is arranged in an area of a sidewall of the valve body 591 close to the end where the water inlet 5911 is located.

In detail, a valve seat 596 is disposed at a right end of the valve body 591.The valve plug 592 is connected with a guide rod 597 extending in a left-right direction, and the guide rod 597 is slidably mounted on the valve seat 596.The reset member 593 is a compression spring mounted on the guide rod 597, of which a left end is abutted against the valve plug 592 and a right end is abutted against the valve seat 596.A limit part 595protruded is provided on an inner wall of the valve body 591 at the water inlet 5911, and is extended in a radial direction of the water inlet 5911. An outer periphery of the left end of the valve plug 592 abuts against the limit part 595 to block the water inlet 5911. A central area of the left end of the valve plug 592 is protruded to form a protrusion 594 being extended outward the outside of the water inlet 5911.

When there is no water in the pressure relief branch 247 or the water pressure is low, the reset member 593 is configured to push the valve plug 592 to be in hermetical contact with the limit part 595 at the water inlet 5911 to block the water inlet 5911. The pressure relief valve 590 is in a closed state, so that the pressure relief branch 247 is not connected.

When the recovery device 500 is blocked in feeding the sewage, the water pressure in the sewage pipe 240 is increased and the sewage flows to the pressure relief branch 247.The valve plug 592 in the pressure relief valve 590 is in direct contact with the sewage in the pressure relief branch 247. The protrusion 594 of the valve plug 592 is acted by the water pressure to generate a rightward pressure, and the valve plug 592is pushed to move toward the right and overcomes the elastic force of the reset member 593, to open the water inlet 5911, so that the water inlet 5911 is connected with the water outlet 5912.At this time, the pressure relief branch 247 is connected, and the sewage can directly flow in the recovery device 500 along the pressure relief branch 247.

After the pressure relief branch 247 is connected, the water pressure therein is rapidly decreased, and the water pressure acting on the valve plug 592 is decreased and is less than the elastic force applied by the reset member 593. The valve plug 592 is configured to move toward the left under the action of the elastic force of the reset member 593, and re-block the water inlet 5911.The pressure relief valve 590 automatically returns to the closed state.

In a further solution of the embodiment, a pressure detection element 245 for detecting a water pressure in the pressure relief branch 247 is further disposed between the water inlet of the pressure relief branch 247 and the pressure relief valve 590. The pressure detection element 245 is connected with a control system of the washing equipment. It can be determined by the washing equipment whether the pressure relief valve 590 is opened according to a condition whether the water pressure detected by the pressure detection element 245 reaches a preset value, and then determined whether the lint collection assembly 570 in the recovery device 500 is blocked.

In the above solution, the pressure relief valve 590 is automatically opened or closed by the change of water pressure in the pressure relief branch 247, the opened or closed state of the pressure relief valve cannot be directly fed back. In order to detect the opened and closed state of the pressure relief valve 590, a pressure detection element 245 is disposed in the pressure relief branch 247. It is determined whether the pressure relief valve 590 is opened by the water pressure in the pressure relief branch 247. The structure is simple, and the opened and closed state of the pressure relief valve 590 can be effectively obtained.

In a further solution of the embodiment, the sewage control valve 241 is specifically disposed between the water outlet of the sewage pipeline 240 and the water inlet of the pressure relief branch 247.

When the filtering device 600 is configured to filter the water, the sewage control valve 241 is in a closed state, and the pressure relief valve 590 is in a closed state, so that the sewage outlet 6103 of the filtering device 600 is not connected with the recovery device 500.Water flows in the filtering device 600 for filtering and then is discharged. The sewage control valve 241 is opened again when the sewage in the filtering device 600 needs to be discharged to the outside, so that the sewage in the filtering device 600 can be discharged to the recovery device 500.

It should be noted that, the sewage control valve 241 is disposed between the water outlet of the sewage pipeline 240 and the water inlet of the pressure relief branch 247.When the sewage control valve 241 is closed, the water pressure in the pressure relief branch 247 may be relatively high. Therefore, in the embodiment, the pressure detection element 245 is controlled to only work when the sewage control valve 241 is opened, and the water pressure in the pressure relief branch 247 is detected, so that it is avoided to misjudge that the lint collection assembly 570 is blocked in being filtered in the filtering device 600due to the sewage control valve 241 not being opened.

In the embodiment, the pressure relief branch 247 is connected with the sewage pipeline 240. The pressure relief valve 590 is provided, and can be automatically opened when the water pressure rises to a preset value. When the lint collection assembly 570 in the recovery device 500 is blocked, the pressure relief branch 247 can be opened by the pressure relief valve 590, so that the sewage discharged from the filtering device 600 can directly flow in the recovery device 500 along the pressure relief branch 247. In this way, when the lint collection assembly 570 is blocked and the water pressure in the sewage pipeline 240 is too high, the function of automatically relieving pressure can be realized. Thereby it is avoided the possibility that components are damaged by excessive water pressure.

### Embodiment 7

As shown in FIG. 1 and FIG. 9, the difference between the embodiment and Embodiment 6 is that the water outlet of the pressure relief branch 247 is not connected with the recovery device 500, but is connected with an external space of the filtering module. Specifically, in the embodiment, the pressure relief branch 247 is connected with an external discharge pipeline 250 of the washing equipment. When the pressure is relieved, the sewage discharged from the pressure relief branch 247 directly flows to the external discharge pipeline 250 and is discharged from the washing equipment.

In the embodiment, the pressure relief valve 590 is automatically opened and closed according to the water pressure in the pressure relief branch 247. The pressure relief valve 590 is opened to relieve pressure when the water pressure in the pressure relief branch 247 reaches a preset value, so that the water pressure in the pressure relief branch 247 is rapidly decreased, and further the pressure relief valve 590 is closed again in a very short time. During this process, although the sewage discharged through the pressure relief branch 247 carries the filtered impurities, the total amount of sewage discharged is very small, and the microplastic content in water discharged from the washing equipment is not too high and meets the emission standards.

Furthermore, the pressure detection element 245 disposed in the pressure relief branch 247 can feed in real time back the water pressure in the pressure relief branch 247. When the sewage in the filtering device 600 is discharged under the action of the circulation pump 400, and if the water pressure detected by the pressure detection element 245 exceeds a preset value and is detected to be decreased, it means that the pressure relief valve 590 is opened under the action of the water pressure. The washing equipment controls the circulation pump 400 to stop running and no longer delivers water into the filtering device 600.

In another solution of the embodiment, the pressure relief branch 247 can also be directly connected with the outside of the washing equipment, instead of discharging the sewage to the outside through the external discharge pipeline 250.

In the embodiment, the pressure relief branch 247 is directly connected with the external discharge pipeline 250 of the washing equipment. Alternatively, the pressure relief branch 247 is directly connected with the outside of the washing equipment, so that the pressure is relieved by discharging the sewage out of the washing equipment. Since the pressure relief valve 590 is opened and closed automatically under the action of water pressure, it takes a very short time in an entire process of relieving pressure. So the total amount of sewage discharged to the outside is not large in relieving pressure. It is achieved that the pressure is relieved to protect the filtering module, and the microplastic content in water discharged out of the washing equipment does not exceed the standard.

### Embodiment 8

As shown in FIG. 1, FIG. 6 and FIG. 9, in the embodiment, a method for controlling the washing equipment of Embodiment 6 or 7, includes:
running a washing program of the washing equipment and performing an additional program of filtering the washing water in a filtering device 600;
determining whether the recovery device 500 is blocked in receiving the sewage; and
if the recovery device is blocked, the additional program being stopped and the washing program continuing being performed.

In the above solutions, when it is determined that the recovery device 500 is blocked in receiving sewage, that is, the lint collection assembly 570 is blocked, only the additional program is stopped, and the washing program continues being performed until it ends. In this way, the filtering device 600 is prevented from being further blocked, and the washing program can be completed without any operation by user, so a higher degree of automation is achieved. In particular, when user is not waiting beside the washing equipment, the washing program is not stopped due to no work of the filtering module, thereby avoiding user complaints on the inability to complete the washing program.

In the specific solution of the embodiment, a process of stopping performing the additional program includes: the circulation pump 400 being not turned on for circulation filtrating in a subsequent stage of the washing program, and the circulation pump 400 being only turned on for drainage filtrating during the drainage process.

Since the filtering device 600 is disposed in the drainage waterway of the washing equipment, it is inevitable that the water is discharged through the filtering device 600. When the lint collection assembly 570 in the recovery device 500 is blocked, the sewage in the filtering device 600 cannot be discharged, but the filtering function is not lost.

In this situation, the circulation filtering is no longer performed in the washing equipment. Only when the drainage process is performed, the circulation pump 400 is turned on for drainage filtering, and the water can be discharged through the filtering device 600.Since the filtering device 600 no longer performs the circulating filtering, the working time of the filtering device 600 is reduced, thereby it is avoided that the filtering device 600 is blocked of due to excessive filtered impurities being accumulated in the drainage process.

In a further solution of the embodiment, if it is determined that the recovery device 500 is not blocked in receiving sewage, the washing program continues being performed and the additional program is maintained to be performed.

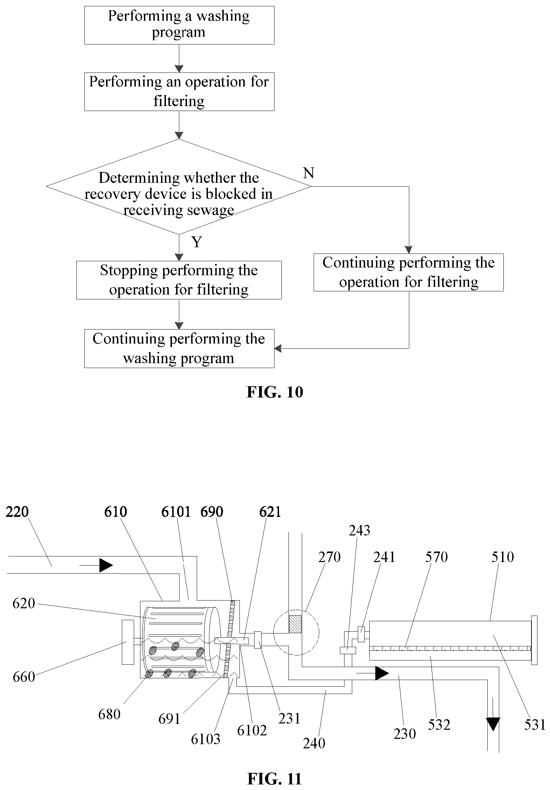

Specifically, a method for controlling the washing equipment in the embodiment is shown in FIG. 10, and includes the following steps:
S31, performing a washing program;
S32, performing an additional program to guide water to the filtering module for filtering;
S33, determining whether the recovery device 500 is blocked in receiving sewage;
S34, if the recovery device is blocked, stopping performing the additional program, otherwise continuing performing the additional program;
S35, the washing program continuing be performed.

In step S33, if the water pressure is detected to reach a preset value by the pressure detection element 245, it is determined that the recovery device 500 is blocked in receiving sewage.

Furthermore, in step S34, when it is determined to be blocked, and after the water pressure detected by the pressure detection element 245 is decreased, the washing equipment also sends a prompt message to remind user to clean the recovery device 500 after this washing program is completed.

The water pressure detected by the pressure detection element 245 is decreased to the preset value, which indicates that the pressure relief valve 590 is opened. At this time, user is promptly reminded that the lint collection assembly 570 in the recovery device 500 is blocked during this washing program and the pressure relief valve 590 is opened to relieve pressure. In this way, user can clean the lint collection component 570 in the recovery device 500 after finishing the laundry, so that the filtering module can work normally when the washing program is performed in the washing equipment again. Especially the filtered impurities accumulated in the filtering device 600 in the filtering process can be smoothly discharged, to ensure the filtering effect. In this way, it is avoided that user cannot know the status of the lint collection assembly 570 in the recovery device 500 and then forgets to clean.

In the embodiment, it is determined whether the recovery device 500 is blocked in the process of receiving sewage during an operation of a washing equipment. When the lint collection component 570 in the recovery device 500 is blocked and cannot continue receiving the sewage, the additional program is stopped performing, while the washing program continues being performed. So the washing program is completed without user's operation, thereby improving the degree of automation of the washing equipment. In the washing machine, it is determined whether the pressure relief valve 590 is opened to relieve the pressure according to the water pressure detected by the pressure detection element 245. A prompt message is sent out after the pressure relief valve 590 is opened, so as to remind user to clean the recovery device 500 after finishing the laundry. It is ensured that the washing equipment can normally perform the additional program to realize the filtering function when the washing equipment runs again, thereby ensuring the cleaning effect of the laundry.

### Embodiment 9

As shown in FIG. 1 and FIG. 11, the difference between the embodiment and Embodiments 1 to 8 is that a filtering module is provided with a blockage detection device for detecting whether a recovery device 500 is blocked in a process of discharging sewage from the filtering device 600 into the recovery device 500. It can be determined by the filtering module whether the recovery device 500 is blocked in the process of discharging the sewage from the filtering device 600 to the recovery device 500 according to a detection result of the blockage detection device.

The filtering module is installed as a whole inside the washing equipment, so user cannot directly observe the status of the filtering module and especially the accumulation of the filtered impurities therein, when the washing equipment runs. Once there are too many filtered impurities, the sewage in the filtering device 600 may be not continue being discharged into the recovery device 500, and further the filtering function of the filtering module may be not continue to be achieved.

By the arrangement of the blockage detection device, it is detected by the filtering module whether it is blocked in a process of discharging the sewage. The blockage detection device is connected with a control system of the washing equipment, so the washing equipment can make reaction in time that discharging the sewage is blocked. In this way, it is avoided that in the filtering module is blocked and unable to perform filtering since user cannot directly observe the status of the filtering module.

In a specific solution of the embodiment, the blockage detection device includes a flow detection device for detecting a flow of sewage discharged from the filtering device 600. It is determined by the blockage detection device whether it is blocked in the process of discharged sewage from the filtering device 600 to the recovery device 500 according to the flow of sewage discharged from the filtering device 600.

Furthermore, in the embodiment, a sewage outlet 6103 of the filtering device 600 is connected with a water inlet of a sewage pipeline 240, and a water outlet of the sewage pipeline 240 is connected with the recovery device 500. The flow detection device is a flow meter 243 disposed in the sewage pipeline 240.

Specifically, a method for detecting whether it is blocked includes:
detecting a flow of sewage discharging from the filtering device 600 in a process of discharging sewage from the filtering device to the recovery device 500; and
determining that the process of discharging sewage from the filtering device 600 to the recovery device 500 is blocked, if it is detected that the flow of sewage discharged from the filtering device 600 is lower than a preset flow.

When the filtering module is in a normal working state, the sewage in the filtering device 600 is discharged into the recovery device 500, and the flow of the sewage discharged from the filtering device can be maintained at a certain range. However, the flow of discharged sewage is decreased when the following conditions occur.

In condition 1, when a large amount of filtered impurities is accumulated in the filtering device 600 to block the filtering device, or when the filtered impurities is accumulated in and block part of the sewage pipeline 240, the sewage is blocked from being discharged from the filtering device 600 into the recovery device 500, and the flow of the sewage is decreased. When the washing equipment detects that the flow of sewage is decreased below the preset flow, it is judged that the filtering device 600 or the sewage pipeline 240 is blocked and the sewage cannot be discharged.

In condition 2, a lint collection assembly 570 is disposed in the recovery device 500 of the embodiment, and the interior of the recovery device 500 is divided into a first chamber 531 and a second chamber 532 in a vertical direction. The water outlet of the sewage pipeline 240 is connected with the first chamber 531. The sewage carrying the filtered impurities flows in the first chamber 531, and flows in the second chamber 532 after being filtered by the filter screen of the lint collection assembly 570. The filtered impurities are collected in the first chamber 531, specially, collected on the upper surface of the lint collection assembly 570. The filtered impurities are separated from water by the lint collection assembly 570 in the recovery device 500, so that the collected filtered impurities can be directly removed for user, and it is avoided that the filtered impurities are mixed in the water and cannot be effectively processed.

However, when the lint collection assembly 570 in the recovery device 500 is covered by the filtering impurities and becomes blocked, the sewage cannot be received for being filtered. The sewage cannot flow in the second chamber 532 through the lint collection assembly 570 and is gradually filled up the first chamber 531.When the first chamber 531 is filled with the sewage or nearly filled with the sewage, the resistance becomes greater in making the sewage flow in the recovery device 500. If there is no additional force to drive the sewage discharge from the filtering device 600 to the recovery device 500, and if a process of discharging the sewage is completed under the action of the gravity of the sewage itself, it is difficult for the sewage to flow into the recovery device 500, to cause to decrease in the flow of the sewage.

When the flow of the sewage is detected to be decreased below the preset flow by the washing equipment, it is determined that the lint collection assembly 570 is blocked. The first chamber 531 is nearly full, and the sewage in the filtering device 600 can no longer is discharged into the recovery device 500.

In the above solution, the flow of the sewage discharged from the filtering device 600 directly indicates the ability of discharging the sewage from the filtering device 600 into the recovery device 500. It is intuitively detected whether it is blocked in the process of discharging the sewage, the structure of the detection device and the logic control are simple, and it is accurate to judge the blockage situation.

In a further solution of the embodiment, the recovery device 500 includes a shell 510, and a lint collection assembly 570 is installed at a certain height inside the shell 510 to receive the sewage for being filtered and collect the filtered impurities. The lint collection assembly 570 includes a frame horizontally arranged and a filter screen laid on the frame.

The filtering module of the embodiment is installed in the washing equipment, and the shell 510 can be installed in the casing 10 of the washing equipment in insertable/extractable manner. An upper side of the shell 510 is an opening, and the lint collection assembly 570 can be detachably installed inside the shell 510. When the recovery device 500, especially the lint collection assembly 570 therein, needs to be cleaned, user can pull the shell 510 out of the casing 10 and remove the lint collection assembly 570 from the interior of the shell 510 through the opening on the upper side of the shell 510 for cleaning. At this time, there is no need to completely remove the recovery device 500, by which it is more convenient to operate.

In the embodiment, a sewage control valve 241 is disposed in the sewage pipeline 240 to control the sewage pipeline 240 to be connected and disconnected. When water flows into the filtering device 600 for filtering, the sewage control valve 241 is closed to be disconnected from the sewage pipeline 240, so it is ensured that the water in the filtering device 600 can flow out from the filtered water outlet 6102 after being filtered. When it is necessary to discharge the sewage from the filtering device 600, the sewage control valve 241 is opened to connect the sewage pipeline 240, and the sewage in the filtering device 600 can be discharged into the recovery device 500.

A flow meter 243 is disposed between the water inlet of the sewage pipeline 240 and the sewage control valve 241. The flow of the sewage discharged is detected by the flow meter 243 only when the sewage control valve 241 is in an open state, and then it is determined whether it is blocked in the process of discharging the sewage.

Preferably, a return control valve 231 is further provided outside a filtered water outlet 6102 of the filtering device 600 to control whether water is discharged through the filtered water outlet 6102 to the outside. When water is filtered in the filtering device 600, the return control valve 231 is in an open state. When the sewage in the filtering device 600 is discharged, the return control valve 231 is closed, so that water in the filtering device 600 cannot be discharged through the filtered water outlet 6102.Thereby it is ensured that the sewage in the filtering device 600 is fully discharged through the sewage outlet 6103.

In the embodiment, in the washing program of the washing equipment, an additional program of delivering water to the filtering module for filtration is performed. Specifically, in the washing or rinsing program, the filtered water outlet 6102 of the filtering device 600 is connected with the return pipeline 230 by a switching device 270, and the circulation pump 400 is turned on to perform the circulation filtering. In the drainage process, the filtered water outlet 6102 of the filtering device 600 is connected with the external drainage pipeline 250 by the switching device 270, and the circulation pump 400 is turned on to perform the drainage filtering. After the filtering device 600 continues running for a time, the sewage in the filtering device is discharged into the recovery device 500 to avoid excessive filtered impurities being accumulated in the filtering device 600.

During the operation of the filtering module, the flow of the sewage discharged from the filtering device 600 in the sewage pipeline 240 can be detected by the flow meter 243, so as to determine whether it is blocked in the process of discharging the sewage from the filtering device 600 into the recovery device 500. The current status of the filtering module can be determined for user without direct observation. The washing equipment can also determine whether the operation of discharging the sewage from the filtering device 600 is normally performed, and make reaction in time, so that the filtering device 600 is prevented from continuing running when the sewage is unable to be discharged. User is reminded to clean the recovery device 500 in time to avoid affecting the next operation of the washing equipment.

### Embodiment 10

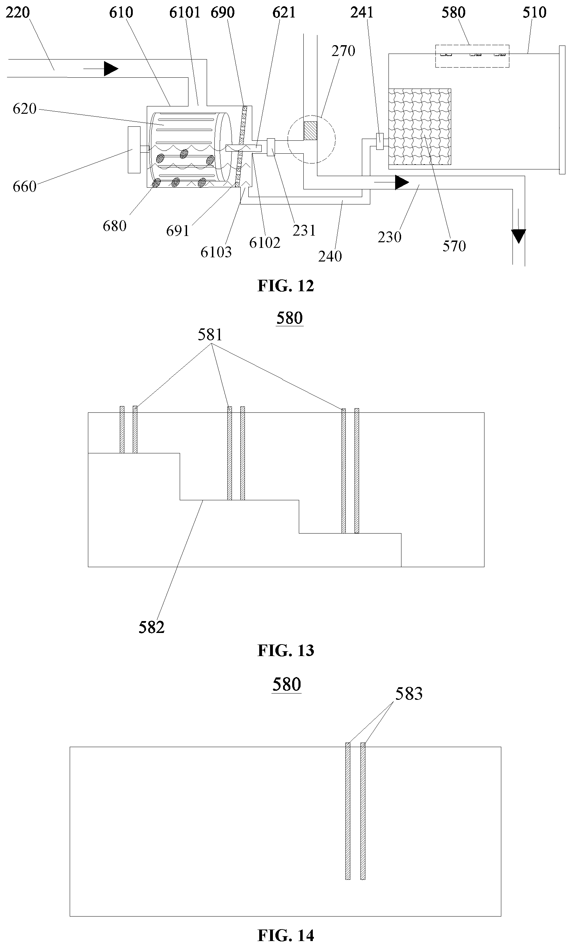

As shown in FIG. 1 and FIG. 12, the difference between the embodiment and Embodiment 9 is that a blockage detection device includes a water level detection device 580 for detecting water level in the recovery device 500. It is determined by the blockage detection device whether it is blocked in the process of discharging the sewage from the filtering device 600 into the recovery device 500 according to the water level in the recovery device 500.

Specifically, the shell 510 of the recovery device 500 of the embodiment has a recovery chamber, and the lint collection assembly 570 is disposed in the recovery chamber and forms a collecting chamber for receiving the sewage. A water outlet of the sewage pipeline 240 is connected with the collecting chamber. The sewage carrying the filtered impurities flows in the collecting chamber, is filtered by the lint collection assembly 570, and then flows into the recovery chamber outside the collecting chamber. The filtered impurities are collected in the collecting chamber.

The water level detection device 580 is disposed in the recovery chamber to detect water level outside the collecting chamber in the recovery chamber. As shown in FIG. 12 of a top view of the recovery device 500 in the embodiment, the water level detection device 580 is specifically disposed on an inner surface of the sidewall of the shell 510.

As a specific solution of the embodiment, the water level detection device 580 is configured to detect the water level in the recovery device 500. If the water level is greater than a preset water level, it is determined that it is blocked in a process of discharging the sewage from the filtering device 600 into the recovery device 500.

The preset water level may be set to be close to an overflow level of the recovery device 500. That is, when it is detected that the water level in the recovery device 500 is greater than the preset water level, the recovery device 500 is close to being full. At this time, if the filtering device 600 continues discharging the sewage out, it is difficult for the sewage to flow into the recovery device 500, that is, it is blocked in a process of discharging the sewage out. Even if the sewage is discharged into the recovery device 500, the sewage overflows the recovery device 500 soon.

It is detected whether the water level in the recovery device 500 reaches the preset water level, and further it is determined whether it is blocked in a process of discharging the sewage from the filtering device 600. So the problem of occurring blockage can be fed back timely, and it can be effectively prevented water from overflowing the recovery device 500.

As another specific solution of the embodiment, a change of the water level in the recovery device 500 is detected by the water level detection device 580. If the change of the water level is less than a preset change, it is determined that it is blocked in the process of discharging sewage from the filtering device 600 into the recovery device 500.

In a process of normally discharging the sewage from the filtering device 600 into the recovery device 500, the sewage in the collecting chamber of the lint collection assembly 570 is quickly filtered and flows to the outside of the collecting chamber, so that the water level outside the collecting chamber is gradually increased. However, once the lint collection assembly 570 is blocked by the filtered impurities, the sewage cannot be filtered and flow to the outside of the lint collection assembly 570. The water level outside the collecting chamber slowly rises or even stops rising, and the change of the water level is detected to be significantly decreased. If the filtering device 600 or the sewage pipeline 240 is blocked, the flow of the sewage flowing into the recovery device 500 is significantly reduced, and the change of the water level is also decreased accordingly.

By detecting whether the change of the water level in the recovery device 500 is less than the preset change, it is determined whether it is blocked in the process of discharging the sewage from the filtering device 600.It is timely and effective to make reaction on the blockage.

The water level detection device 580 in the embodiment with a specific structure shown in FIG. 13, includes a plurality of groups of water level probes 581 disposed at different heights inside the recovery device. Feedback signal is generated when the water level probes 581 are in contact with water. The water level detection device 580 further includes a step structure 582 having a plurality of steps of different heights, and one group of water level probes 581 is respectively arranged on each of the steps.

Furthermore, each group of water level probes 581 includes two electrodes disposed at intervals, and a feedback signal is generated when the two electrodes are connected by water.

The water level is detected by the water level detection device 580. As the water level in the recovery device 500 rises, one step of the step structure 582 is submerged in water every time, and the lower ends of the two electrodes of one group of water level probes 581 corresponding to the one step are in contact with water, so that the two electrodes are connected to generate a feedback signal. According to the on-off status of each of the multiple groups of water level probes 581, the water level in the recovery device 500 can be determined. The preset water level can be set to a height of the step corresponding to one group of water level probes 581. When a signal that the electrodes of the group of water level probes 581 are connected is received, it is determined that the water level is greater than the preset water level.

By the arrangement of the water level detection device 580 with the above structure, the time when the two electrodes in each group of water level probes 581 are connected is obtained during the process of the two electrodes in each of groups of water level probes 581 being connected one by one, as the water level in the recovery device 500 continues to rise. The change of the water level is calculated based on the time difference between the two electrodes in different water level probes 581 being connected.

Alternatively, after two electrodes of any group of water level probes 581 are connected, and if two electrodes of the group of water level probes 581 being higher than and adjacent to the group are still not connected after a set time, it is determined that the change of the water level is less than the preset change. For example, after two electrodes of one group of water level probes 581 are connected, and if two electrodes of the group of water level probes 581 being higher than and adjacent to the one group are still not connected after a set time, it is determined that the change of the water level is less than the preset change.

Another specific structure of the water level detection device 580 is shown in FIG. 14, which is an electrode-type water level detection device 583 including two electrode sheets extending by a length in a vertical direction. The two electrode sheets are arranged oppositely to each other at an interval. A capacitance between the two electrode sheets is changed with an area of the electrode sheets immersed in water.

As the water level in the recovery device 500 is changed, the area of the two electrode sheets immersed in water is changed, that is, the area of surfaces of the two electrode sheets opposite to each other covered by water is changed. The two electrodes form a capacitor. The dielectric between the two electrode sheets is changed from air to water, which causes the capacitance between the two electrode sheets to be changed. The water level in the recovery device 500 can be calculated based on the capacitance detected.

The water level detection device 580 with the above structure can obtain the specific water level in the recovery device 500 in real time, and it is determined whether the current water level reaches the preset water level. On the other hand, the change of the water level can also be calculated according to change of the water level detected in real time, and then it can be determined whether the change of the water level is lower than the preset change. In this way, the water level in the recovery device 500 is more accurately detected.

In the embodiment, the filtering module is provided with the water level detection device 580 as the blockage detection device. It is determined whether it is blocked in the process of discharging the sewage from the filtering device 600 by detecting the water level in the recovery device 500. The structure is simple, and the problem of occurring blockage can be fed back timely and effectively.

### Embodiment 11

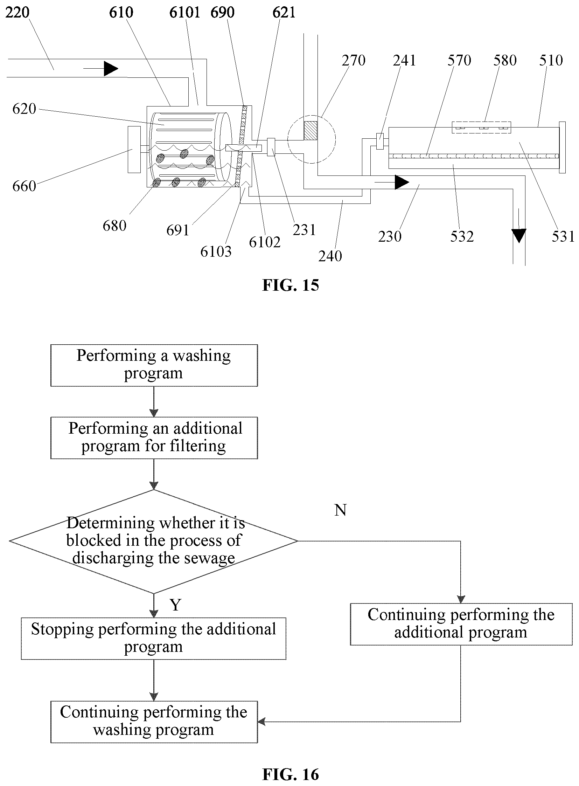

As shown in FIG. 1 and FIG. 15, the difference between the embodiment and Embodiment 10 is the specific structure of the recovery device 500.

Specifically, in the embodiment, the structure of the recovery device 500 is similar to that of Embodiment 9. An interior of the recovery device 500 is divided into a first chamber 531 and a second chamber 532 in a vertical direction by a lint collection assembly 570 disposed at a height inside the shell 510. A water outlet of a sewage pipeline 240 is connected with the first chamber 531. The sewage carrying the filtered impurities flows into the first chamber 531, and flows into the second chamber 532 after being filtered by the lint collection assembly 570. The filtered impurities are collected in the first chamber 531, that is, collected on an upper surface of the lint collection assembly 570.The filtered impurities in the recovery device 500 can be separated from water by the lint collection assembly 570, so that the collected filtered impurities can be directly removed by user. It is avoided that the filtered impurities are mixed in the water and cannot be effectively removed.

In a specific solution of the embodiment, it is determined whether it is blocked in the process of discharging sewage from the filtering device 600 into the recovery device 500, by detecting by the water level detection device 580 whether the water level in the recovery device 500 is greater than a preset water level.

Specifically, the preset water level in the embodiment is higher than a position where the lint collecting assembly 570 is installed. When it is detected that the water level in the recovery device 500 reaches the preset water level, the recovery device 500 may be nearly full of the sewage. In this time, the sewage may be unable to flow into the recovery device 500 to cause the blockage when the sewage continues being discharged from the filtering device 600. Alternatively the lint collection assembly 570 is covered by the filtered impurities and becomes blocked, so that the sewage in the first chamber 531 cannot flow into the second chamber 532 below after being filtered, but remains in the first chamber 531. And the water level is caused to gradually reach the preset water level.

Therefore, in the above solution of the embodiment, the judgment logic being same with that of Embodiment 10 can still be used. That is, if it is detected that the water level in the recovery device 500 is greater than the preset water level, it is determined that it is blocked in the process of discharging the sewage from the filtering device 600 into the recovery device 500.

In another specific solution of the embodiment, it is determined whether it is blocked in the process of discharging the sewage from the filtering device 600 into the recovery device 500, by detecting by the water level detection device 580whether the change of the water level in the recovery device 500 is less than the preset change.

Specifically, the change of the water level in the second chamber 532 is detected by the water level detection device 580. When the filtering device 600 or the sewage pipeline 240 is blocked by the filtered impurities, the flow of the sewage flowing into the recovery device 500 is reduced, and the flow of the sewage flowing into the second chamber 532 after being filtered by the lint collection assembly 570 is also reduced accordingly. It is indicated that the change of the water level in the second chamber 532 is decreased. When the lint collection assembly 570 is covered by the filtered impurities and becomes blocked, the sewage in the first chamber 531 cannot flow into the second chamber 532 below after being filtered, and the change of the water level in the second chamber 532 is also decreased.

Therefore, in the above solution of the embodiment, the judgment logic being same with that of Embodiment 10 can also be used. That is, if it is detected that the change of the water level in the recovery device 500 is less than the preset change, it is determined that it is blocked in the process of discharging the sewage from the filtering device 600 into the recovery device 500.

The structure of the recovery device 500 of the embodiment is different from that of Embodiment 10.It can be determined whether it is blocked in the process of discharging the sewage from the filtering device 600 by detecting the water level.

### Embodiment 12

As shown in FIG. 1, a method of the embodiment for controlling a washing equipment having a filtering module of the above embodiment, includes:
running a washing program of the washing equipment and performing an additional program of filtering the washing water in a filtering module;
determining whether it is blocked in a process of discharging the sewage from the filtering device 600; and
if it is blocked in the process of discharging the sewage, the additional program being stopped and the washing program continuing being performed.

In the above solutions, when it is determined that it is blocked in the process of discharging the sewage from the filtering device 600, only the additional program is stopped being performed, and the washing program continues being performed until it ends. In this way, it can be avoided the problems caused by continuously performing to filter, and this washing program can be completed without user's operation, so a higher degree of automation is achieved. In particular, when user is not waiting beside the washing equipment, the washing program is stopped due to unable of discharging the sewage from the filtering device 600, thereby avoiding user complaints on the inability to complete the washing program.

In the specific solution of the embodiment, an operation of stopping performing the additional program includes: the circulation pump 400 being not turned on for circulation filtrating in a subsequent stage of the washing program, and the circulation pump 400 being only turned on for drainage filtrating during the drainage process.

The filtering device 600 is disposed in the drainage waterway of the washing equipment, so it is inevitable that the water is discharged through the filtering device 600. In the embodiment, the condition for determining blockage is adjusted, such as the preset flow in Embodiment 9, or the preset water level or the preset change in Embodiments 10 and 11, so it is determined that the additional program is stopped. Although it is blocked in the process of discharging the sewage from the filtering device 600, the filtering function of the filtering device 600 is not completely lost.

At this time, the circulation filtering is no longer performed in the washing equipment. Only when the drainage process is performed, the circulation pump 400 is turned on for drainage filtering, and the water can be discharged through the filtering device 600.

In a further solution of the embodiment, if it is determined that it is not blocked in the process of discharging the sewage, the washing program continues being performed and the additional program is maintained to be performed.

Specifically, the method for controlling the washing equipment in the embodiment is shown in FIG. 16 and includes the following steps:
S41, performing a washing program;
S42, performing an additional program to guide water to the filtering module for filtering;
S43, determining whether it is blocked in the process of discharging the sewage from the filtering device 600;
S44, if it is blocked in the process of discharging the sewage, stopping performing the additional program, otherwise continuing performing the additional program;
S45, the washing program continuing be performed.

In a further solution of the embodiment, when it is determined that it is blocked in the process of discharging the sewage from the filtering device 600, the washing equipment also sends out a prompt message to remind user to clean the recovery device 500 or maintain the filtering device 600 after the washing program is completed. In this way, user can know when it is block in the process of discharging the sewage from the filtering device 600, so it can be ensured that the filtering module can work normally when the washing equipment runs the washing program again. Especially the filtered impurities accumulated in the filtering process can be smoothly discharged from the filtering device 600 discharge to ensure the filtering effect.

In the embodiment, in the working status of the filtering module of the washing equipment, when it is determined it is blocked in the process of discharging the sewage from the filtering device 600, the additional program can be stopped being performed, while the washing program continues being performed. So it is ensured that the washing program is completed without user's operation, thereby improving the degree of automation of the washing equipment. And it is avoided that the washing program is suspended once the filtering module is in trouble, and the problem will not happen that it takes much time to washing laundry without user's operation in time.

### Embodiment 13

As shown in FIGs. 1, 2, 5 to 9, and 11 to 15, the difference between this embodiment and the above-mentioned embodiments is that the filtering capacity of the filtering module is defined as the usable times remained of the filtering module. When the usable times remained is decreased to a preset number, the washing equipment sends an alarm signal.

Specifically, the recovery device 500 in the embodiment is integrated with a detergent dispensing device and can be disposed inside a water container of the detergent dispensing device. After the sewage is filtered in the recovery device 500, the filtered water flows into the water container. The water container is connected with the water holding barrel 100 of the washing equipment, and the filtered water can flows into the water holding barrel 100.

A dispensing box is arranged in inside the water container in an insertable/extractable manner, and a detergent holding chamber and an installation chamber independent from each other are formed in the dispensing box. The detergent holding chamber and the installation chamber are independently connected with the water container. The recovery device 500 is installed in the installation chamber.

User can pull out the dispensing box, add detergent into the detergent holding chamber, and then re-insert the dispensing box into the water container. The detergent in the detergent holding chamber can be automatically dispensed into the water holding barrel 100 during performing a washing program in the washing equipment. When the recovery device 500 needs to be cleaned, the dispensing box is also pulled out to remove the lint collection assembly 570 in the recovery device 500 for cleaning.

In the embodiment, according to on a capability of the recovery device 500 to collect filtered impurities, it is possible to estimate the maximum number of times the washing equipment can run the washing program in a period from an initial state (i.e., the state of not collecting filtered impurities) to the state being completely blocked by filtered impurities.

In the embodiment, each time the washing program is performed in the washing machine, the number of times the recovery device 500 being used is increased by one. A total number of usable times of the recovery device 500of the washing equipment is preset S from the initial state, and the total number of usable times S is not higher than a maximum number of times that the washing equipment can perform the washing program. That is, before the number of used times S1 of the recovery device reaches the total number of usable times S, the recovery device 500 is not completely blocked by the filtered impurities.

The usable times remained of the filtering module described in the embodiment specifically refers to the usable times remained of the recovery device 500, which is the difference between the total usable times S and the used times S1.

Generally, the dispensing box is pulled out by user each time, which means that detergent is added into the dispensing box by user, and the washing machine runs one washing program. Therefore, in a further solution of the embodiment, the washing equipment calculates the number of times that the dispensing box is pulled out, which is as the number of times S1 the recovery device 500 is used. The number of usable times remained of the recovery device 500 can be calculated by S2 = S-S1, which is the number of usable times remained of the filtering module. When the number of times S2 is decreased to a preset number of times S0, an alarm signal is sent out by the washing equipment to remind user to clean the recovery device 500.

Through the above solution, the washing equipment can automatically remind user to clean the recovery device 500 in time, so the recovery device 500 is not blocked in performing the washing program in the washing equipment, the sewage in the filtering device 600 can be discharged, and further the filtering effect is not affected during the washing program.

In detail, in the embodiment, the preset number of times S0 is set to 0. When user pulls out the dispensing box once and the number of times S1 calculated by the washing equipment reaches S, S2 is decreased to 0, and the washing equipment sends an alarm signal. User can clean the recovery device 500 and then again insert the dispensing box into the water container of the detergent dispensing device.

Furthermore, in the embodiment, the number of times S1 is reset to zero when it is detected by the washing equipment that the dispensing box is again inserted, and the number of times S1 is recorded as 1 when the dispensing box is detected to be pulled out again.

For example, the total number of usable times S can be used is preset to 20 for the washing equipment, and each time user pulls out the dispensing box, the number of times S2 calculated by the washing machine is equal to S minus 1. When user pulls out the dispensing box for the 20th time, S2 is calculated by the washing machine as 0 and an alarm signal is sent out. After user cleans the recovery device 500 and inserts the dispensing box again in the washing equipment, the number of times S1 is reset to zero. When it is detected by the washing equipment that the dispensing box is pulled out again, the number of times S1 is recorded as 1. The total number of usable times S can also be preset as other values, such as any value in a range of 10 to 30.

It should be noted that, in the embodiment, after the washing equipment sends out an alarm signal, and when it is detected that the dispensing box is inserted again, the number of times S1 is directly reset to zero, and it is detected whether the recovery device 500 has been cleaned. That is, after the washing machine sends out an alarm signal, it defaults that user reinserts the dispensing box into the water container only after cleaning the recovery device 500.

However, in the embodiment the number of times that the dispensing box is pulled out is calculated by a washing equipment, rather than the number of times that the washing program is actually performed, so there may be a situation where the dispensing box is pulled out by user multiple times in performing only one the washing program. Alternatively, when the amount of lint fallen off the laundry to be washed is small, it is possible that the number of times S1 that the dispensing box is pulled outreaches S, that is, the number of times that the washing program is performed reaches S, but there still is a certain capacity in the recovery device 500 for continuing to receive sewage and collect the filtered impurities in the sewage.

In the above two situations, when the washing equipment sends out an alarm signal, the recovery device 500may be not cleaned by user, but the dispensing box is directly inserted into the water container of the detergent dispensing device again to continue to perform the next washing program. At this time, the number of times S1 in the washing machine is reset to zero, and an alarm signal is sent out again only when the number of times that the dispensing box is pulled out reached S0 again.

However, when a certain amount of the filtered impurities is collected in the recovery device 500, and before the total number of times that the washing equipment performs the washing program again reaches S0, the recovery device 500 may be blocked by the filtered impurities and cannot further receive the sewage discharged from the filtering device 600. At this time, since the accumulated number of times S1 does not reach S0, an alarm signal is not sent out in the washing machine.

In order to avoid the above-mentioned problem, in a further solution of the embodiment, the washing equipment can receive a user's instruction to adjust the total number of usable times, and the preset value S of the total number of usable times can be adjusted to S'.

Specifically, after the washing equipment sends out an alarm signal, and if it is determined by user that the recovery device 500 does not need to be cleaned, the dispensing box can be directly inserted into the water container of the detergent dispensing device after dispensing the detergent is completed. User can manually operate the washing equipment to set the value of the total number of usable times according to the current amount of filtered impurities collected in the recovery device 500. For example, the preset value S of the total number of usable times is 20, and user manually adjusts the value S' to 5. In this way, the washing equipment re-accumulates the number of times the dispenser box is pulled out. When the dispensing box is pulled out for the fifth time, the condition that an alarm signal is sent out is met according to S2=S'-S 1=0, and the washing equipment sends out an alarm signal.

In the above solutions, the washing machine is provides with an editable function for setting the total number of usable times of the recovery device 500. If user does not clean the recovery device 500 after the washing equipment sends out an alarm signal, user can manually adjust the total number of usable times to reduce the number of used times that the washing program is performed before the washing machine sends out an alarm signal. So it is ensured that the recovery device 500 is not blocked during the process of performing the washing program.

In a further solution of the embodiment, after the washing equipment receives user's instruction to adjust the value of the total number of usable times, and if the number of times that the dispensing box is pulled reaches the value S' adjusted, that is, the condition that an alarm signal is sent out is met according to S2=0, the washing equipment sends out an alarm signal, and then the total number of usable times can be automatically restored to the preset value S, for example 20 times in the embodiment.

The total number of usable times is set by user generally when the recovery device 500 is not cleaned after an alarm signal is sent out by the washing equipment. When the washing equipment sends out an alarm signal again, it is high possibility that the recovery device 500 is in or at least close to a state being blocked by the filtered impurities since user does not clean the recovery device after sending out the previous alarm signal. Therefore, when the alarm signal is sent out, user is likely to manually clean the recovery device 500.

When the recovery device 500 is used again after being cleaning, there are no filtered impurities collected therein. The recovery device 500 will basically not be blocked before the total number of times that the washing program is performed again or the number of usable times of the recovery device 500 reaches the preset total number of usable times S. In the embodiment, the total number of usable times is automatically controlled to restore the preset value S, which saves the trouble of manual setting by user. And it is not happened that the washing equipment send out an alarm signal when the recovery device 500 can continue to be used multiple times.

In the preferred solution of the embodiment, it is detected by the washing equipment that the dispensing box is pulled out and an alarm signal is sent out according to the adjusted total number of usable times S'. Before receiving the instruction to start the washing program, and if no instruction for adjusting the total number of usable times is received, the total number of usable times can be restored to the preset value S. Otherwise the total number of usable times is adjusted according to the received instruction.

The washing equipment can send out an alarm signal based on the adjusted total number of usable times S'. It is possible the value S' previously set by user is inappropriate, so the recovery device 500 is able to continue to be used without being cleaned. In the above solution, when the above situation occurs, user can continue to manually set the total number of usable times. If the washing program starts to be performed without manually setting the total number of usable times, it means that the recovery device 500 was cleaned by user, and the washing equipment is automatically controls to restore the total number of usable times to the preset value S.

In the embodiment, the total number of usable times of the recovery device 500is preset in the washing equipment, and the number of times that the dispensing box of the detergent dispensing device is pulled out is as the number of usable times of the recovery device 500.When the number of times used reaches the preset number of times, the washing equipment sends an alarm signal to remind user to clean the recovery device 500.It is ensured that there is sufficient capacity in the recovery device 500 to receive the sewage discharged from the filtering device 600 and collect the filtered impurities therein, when the washing program is performed in the washing equipment.

### Embodiment 14

As shown in FIG. 1, FIG. 2, FIG. 5 to FIG. 9, and FIG. 11 to FIG. 15, any one of the above embodiments is further described in the embodiment.

In a washing equipment, an additional program is performed of delivering water to the filtering module for filtration during the washing program, wherein the additional program is performed once each time the washing program is completed.

In the embodiment, the filtering capacity of the filtering module includes: the number of times that the additional program is performed in the filtering module from a current state to a state where the filtering device 600 and/or the recovery device 500 are blocked.

An initial filtering capacity of the filtering module is at least 10 to 30 times, preferably 15 to 25 times. For example, the initial filtering capacity of the filtering module is at least 20 times. That is, when there are no filtered impurities attached to the filtering device 600 and no filtered impurities and sewage are collected in the recovery device 500, the additional program is completely performed in the filter module in consecutively performing the washing program by at least 20 times, and there is no failure of blockage.

In the above description of the embodiment, "completely performing the additional program" refers to performing a circulation filtering according to the set time length in which a washing program or a rinsing program is performed respectively, and performing a drainage filtering in a drainage program.

After the additional program is performed completely in the filtering module in the washing program each time, the washing equipment records the current filtering capacity of the filter module by the original filtering capacity minus one time. If the time length of perform the circulation filtering in the filtering module in this washing program is less than the set time length, the loss of filtering capacity in this washing program can be determined based on the ratio of the actual time length for filtration to the set time length, and then the current filtering capacity of the filtering module can be calculated.

In a preferred solution of the embodiment, a filtering threshold is set to 1 or 2.When the current filtering capacity of the filtering module is lower than the filtering threshold, water is controlled to not be delivered to the filtering module, and the circulation filtering is performed in the subsequent process of this washing program.

In the above solutions, when the filtering capacity of the filtering module in the washing equipment is calculated as close to 0, but not to reach 0, water is controlled not to be delivered to the filtering module. So there is no difference between the filtering capacity calculated and the current actual state of the filtering module, and water is timely controlled to be delivered to the filtering module before there are faults in the filtering module such as blockage.

In another preferred solution of the embodiment, the initial filtering capacity of the filtering module is recorded as X, and the filtering threshold is set to X/5 to X/3.For example, if the initial filtering capacity of the filtering module is 20 times, the filtering threshold can be set to 4 to 6 times. When the current filtering capacity of the filtering module is lower than the filtering threshold, the frequency and/or time length of delivering water to the filtering module is reduced.

In the above solutions, the filtering threshold is relatively high. Even if there is a difference between the filtering capacity calculated by the washing equipment and the current actual state of the filtering module, it is basically impossible that there are faults affecting the filtering effect of the filtering module such as blockage when the filtering capacity calculated is lower than the filtering threshold. At this time, the frequency and/or time length of delivering water to the filtering module is reduced, and the washing program continues to be performed, so part of the filtering effect can be retained and the effect of washing laundry can be improved.

The specific method for reducing the frequency and/or time length of delivering water to the filtering module is described in detail in the above embodiments and not repeated in the embodiment.

In a further solution of the embodiment, the washing water and the water drained out of the washing equipment are filtered by the filtering device 600, and the filtered impurities with a size greater than 50 µm can be filtered out, and the filtered impurities may include microplastics. In particular, the filtered impurities may include plastic fibers with a length greater than 50 µm and a diameter of 10µm to 1000 µm. Preferably, the plastic fibers have a length of 400µm to 600 µm, and the most common length is 500 µm±50 µm in the distribution. These plastic fibers preferably have a diameter of 10 to 50 µm, and the most common diameter is 17 µm ± 2 µm.

In order to filter and remove microplastics with the above sizes, hole size of a filter screen of the filtration device 600 is selected to be 20 mesh to 500 mesh. In order to ensure that the recovery device 500 can collect the microplastics carried in the sewage as fully as possible, and to prevent the microplastics discharged from the filtering device 600 from passing through the lint collection assembly 570 in the recovery device 500, the hole size of the filter screen of the lint collection assembly 570 is at least not larger than the hole size of the filter screen of the filtering device 600.That is, the hole size of the filter screen of the lint collection assembly 570 is not less than the hole size of the filter screen of the filtering device 600 which is 20 mesh to 500 mesh.

In the embodiment, by conducting a large number of tests on different types of laundry and different washing program in advance, it was found that the hole size of the filter screen of the lint collection assembly 570 and the hole size of the filter screen of the filtering device 600 are set within the above range. Plastic fibers with the above sizes can be filtered out from the washing water and the water discharged from the washing equipment, and ultimately microplastic particles accounting for more than 80% of the total content in the water can be collected in the recovery device 500, so that the content of microplastics in water finally discharged from the washing equipment is greatly reduced and can meet the emission standards.

In the embodiment, the filtering device 600 has a self-cleaning function, and the loss of the filtering capacity of the filtering module is mainly caused in the recovery device 500. For example, as the total amount of filtered impurities collected in the recovery device 500 is increased, the lint collection assembly 570 is gradually covered by the filtered impurities, and the holes of the filter screen are blocked by the filtered impurities to cause the lint collection assembly 570 to be unable to filtering the sewage.

In the embodiment, a large number of tests are carried out on different types of laundry and different washing programs in advance, and the structure of the lint collection assembly 570 is adjusted to change the maximum amount of filtered impurities to be collected. So the additional program is completely performed in the filtering module when the washing program is consecutively performed by at least 10 to 30 without cleaning the recovery device 500 by user, thereby improving user experience.

The above description is only a preferred embodiment of the present application, and does not limit the present application. Although the present application has disclosed preferred embodiments, it is not intended to limit the present application. Without departing from the scope of the technical solution of the present application, anyone in the field of this patent application can be hinted to make some changes or modifications as equivalent embodiments by the above technical content. Any simple modification, equivalent change and modification made to the above embodiments according to the substantive content of the present application still belong to the scope of the solution of the present application.

## Claims

1. A filtering module, including:
a filtering device, provided with a sewage outlet for discharging sewage carrying filtered impurities;
a recovery device, connected with the sewage outlet of the filtering device, and provided with at least two lint collection assemblies; wherein
the lint collection assemblies are configured to receive in sequence or simultaneously the sewage discharged from the filtering device and collect the filtered impurities in the sewage.

2. The filtering module according to claim 1, wherein, each of the lint collection assemblies has a collecting chamber for collecting the filtered impurities, and the collecting chamber is connected with the sewage outlet of the filtering device.

3. The filtering module according to claim 2, including a sewage pipeline, wherein, a water inlet of the sewage pipeline is connected with the sewage outlet of the filtering device, and a water outlet is connected with one of collecting chambers;
a position of the sewage pipeline between the water inlet and the water outlet is connected with a sewage branch, and a water outlet of the sewage branch is connected with another of the collecting chambers.

4. The filtering module according to claim 3, wherein, a branch control valve is provided in the sewage branch to control the sewage branch to be disconnected or connected.

5. The filtering module according to claim 4, wherein, a pressure detection element for detecting a water pressure in the sewage branch is provided between a water inlet of the sewage branch and the branch control valve.

6. The filtering module according to claim 5, wherein, an initial state of the branch control valve is a closed state, and it is determined whether the branch control valve to be opened according to the water pressure detected by the pressure detection element.

7. The filtering module according to any one of claims 3 to 6, wherein, a sewage control valve for controlling the sewage pipeline to be connected and disconnected is provided in the sewage pipeline.

8. The filtering module according to claim 7, wherein, the sewage control valve is arranged between the water outlet of the sewage pipeline and a water inlet of the sewage branch.

9. The filtering module according to any one of claims 2 to 8, wherein, the recovery device includes a shell having a main chamber inside, and the lint collection assemblies are provided in the main chamber, so that the sewage carrying the filtered impurities flows into the collecting chambers of the lint collection assemblies, the sewage filtered by the lint collection assemblies flows into the main chamber outside the collecting chambers, and the filtered impurities are collected in the collecting chambers.

10. A filtering module, including:
a filtering device, provided with a sewage outlet for discharging sewage carrying filtered impurities;
a recovery device, connected with the sewage outlet of the filtering device, and used for receiving the sewage discharging from the filtering device;
a pressure relief device, disposed between a sewage outlet of the filtering device and the recovery device, and used for relieving pressure when the sewage flowing into the recovery device is blocked.

11. The filtering module according to claim 10, wherein, the pressure relief device includes a pressure relief branch and a pressure relief valve disposed in the pressure relief branch;
a water inlet of the pressure relief branch is connected between the sewage outlet of the filtering device and the recovery device, and the pressure relief valve is opened to connect the pressure relief branch, so that sewage discharged from the filtering device flows into the pressure relief branch for relieving the pressure.

12. The filtering module according to claim 11, wherein, the pressure relief valve includes:
a valve body, provided with a water inlet and a water outlet;
a valve plug, movably disposed in the valve body; and
a reset member, used to apply a reset force on the valve plug to keep the valve plug blocking the water inlet; wherein,
the valve plug is configure to move under an action of the water pressure to open the water inlet, when the water pressure in the pressure relief branch reaches a preset value; the valve plug is configured to be reset to block the water inlet under an action of the reset member, when the water pressure in the pressure relief branch is decreased.

13. The filtering module according to claim 12, wherein, the valve body has a length extending along a direction of a reciprocating motion of the valve plug, the water inlet is at one end of the valve body, and the water outlet is arranged in an area of a sidewall of the valve body close to the one end where the water inlet is located.

14. The filtering module according to claim 11, wherein, a pressure detection element for detecting a water pressure in the pressure relief branch is disposed between the water inlet of the pressure relief branch and the pressure relief valve.

15. The filtering module according to any one of claims 11 to 14, including a sewage pipeline, wherein,
a water inlet of the sewage pipeline is connected with the sewage outlet of the filtering device, a water outlet is connected with the recovery device,
the water inlet of the pressure relief branch is connected with the sewage pipeline, and a sewage control valve controlling the sewage pipeline to be connected and disconnected is arranged on the sewage pipeline.

16. The filtering module according to claim 15, wherein, the sewage control valve is disposed between the water outlet of the sewage pipeline and the water inlet of the pressure relief branch.

17. The filtering module according to any one of claims 10 to 16, wherein, the recovery device includes:
a shell, having a recovery chamber inside;
a lint collection assembly, disposed in the recovery chamber and forming a collecting chamber for receiving sewage, so that the sewage carrying the filtered impurities flows in the collecting chamber, is filtered by the lint collection assembly, and then flows into the recovery chamber outside the collecting chamber, and the filtered impurities are collected in the collecting chamber;
the pressure relief device is configured to relieve pressure when the lint collection assembly is blocked by filtered impurities.

18. The filtering module according to claim 17, wherein, the pressure relief device includes a pressure relief branch, and a water inlet of the pressure relief branch is connected between the sewage outlet of the filtering device and the recovery device;
a water outlet of the pressure relief branch is connected with an external space, or the water outlet of the pressure relief branch is connected with the recovery chamber outside the collecting chamber.

19. A filtering module, including:
a filtering device, provided with a sewage outlet for discharging sewage carrying filtered impurities;
a recovery device, connected with the sewage outlet of the filtering device, and used for receiving the sewage discharging from the filtering device; and
a blockage detection device, used to detect whether the recovery device is blocked in a process of discharging sewage from the filtering device into the recovery device.

20. The filtering module according to claim 19, wherein, the blockage detection device includes a flow detection device for detecting a flow of sewage discharged from the filtering device, and it is determined by the blockage detection device whether it is blocked in the process of discharged the sewage from the filtering device to the recovery device according to the flow of sewage discharged from the filtering device.

21. The filtering module according to claim 20, including a sewage pipeline, the sewage outlet of the filtering device is connected with a water inlet of the sewage pipeline, and a water outlet of the sewage pipeline is connected with the recovery device, and the flow detection device is disposed in the sewage pipeline.

22. The filtering module according to claim 19, wherein, the blockage detection device includes a water level detection device for detecting water level in the recovery device, and it is determined by the blockage detection device whether it is blocked in the process of discharging the sewage from the filtering device into the recovery device according to the water level in the recovery device.

23. The filtering module according to claim 22, wherein, the water level detection device includes a plurality of groups of water level probes disposed at different heights inside the recovery device, and a feedback signal is generated when the water level probes are in contact with water.

24. The filtering module according to claim 23, wherein, each group of water level probes includes two electrodes disposed at intervals, and a feedback signal is generated when the two electrodes are connected by water.

25. The filtering module according to claim 22, wherein, the water level detection device includes two electrode sheets extending by a length in a vertical direction, the two electrode sheets are arranged oppositely to each other at an interval; and a capacitance between the two electrode sheets is changed with an area of the electrode sheets immersed in water.

26. The filtering module according to any one of claims 22 to 25, wherein, the recovery device includes:
a shell, having a recovery chamber inside; and
a lint collection assembly, disposed in the recovery chamber and forming a collecting chamber for receiving sewage, so that the sewage carrying the filtered impurities flows in the collecting chamber, is filtered by the lint collection assembly, and then flows into the recovery chamber outside the collecting chamber, and the filtered impurities are collected in the collecting chamber;
the water level detection device is disposed in the recovery chamber to detect the water level outside the collecting chamber.

27. A method for controlling the filtering module according to any one of claims 19 to 26, including: determining whether it is blocked in a process of discharging sewage from the filtering device into the recovery device according to a result detected by the blockage detection device.

28. The method for controlling the filtering module according to claim 27, wherein, the blockage detection device includes a flow detection device for detecting a flow of sewage discharged from the filtering device; if it is detected that the flow of sewage discharged from the filtering device is lower than a preset flow, it is determined that the process of discharging sewage from the filtering device into the recovery device is blocked; or,
the blockage detection device includes a water level detection device for detecting water level in the recovery device, if it is detected that the water level in the recovery device is greater than a preset water level, or it is detected that a change of the water level in the recovery device is less than a preset change, it is determined that the process of discharging sewage from the filtering device into the recovery device is blocked.

29. A washing equipment, including a water holding barrel and the filtering module according to any one of claims 1 to 26, wherein the filtering device of the filtering module is connected with the water holding barrel.
